# EUROPEAN PATENT SPECIFICATION

(11) **EP 3 200 459 B1**
(45) Date of publication and mention of the grant of the patent: **22.04.2020**
(21) Application number: 15845163.3
(22) Date of filing: 22.09.2015
(51) Int. Cl.: H04N 19/105, H04N 19/176, H04N 19/70, H04N 19/593, H04N 19/117, H04N 19/157, H04N 19/164, H04N 19/426, H04N 19/436, H04N 19/55

(54) **ENCODING AND DECODING METHODS, ENCODING AND DECODING APPARATUSES**
CODIERUNGS- UND DECODIERUNGS-VERFAHREN, CODIERUNGS- UND DECODIERUNGS-VORRICHTUNGEN
PROCÉDÉS DE CODAGE ET DE DÉCODAGE, APPAREILS DE CODAGE ET DE DÉCODAGE

(30) Priority: 22.09.2014 CN 201410486021
(43) Date of publication of application: 02.08.2017
(73) Proprietor: ZTE Corporation, Shenzhen, Guangdong 518057 (CN)
(72) Inventor: LI, Ming, Shenzhen Guangdong 518057 (CN); WU, Ping, Shenzhen Guangdong 518057 (CN); SHANG, Guoqiang, Shenzhen Guangdong 518057 (CN); XIE, Yutang, Shenzhen Guangdong 518057 (CN)
(74) Representative: Novagraaf Technologies
(86) International application number: PCT/CN2015/090297
(87) International publication number: WO 2016/045581

(56) References cited:
- WO-A1-2015/196030
- CN-A- 103 997 650
- US-A1- 2014 226 721
- GUO L ET AL: "RExt: Signaling Motion Vector Range for Intra Block Copying", 15. JCT-VC MEETING; 23-10-2013 - 1-11-2013; GENEVA; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/,, no. JCTVC-O0244, 15 October 2013 (2013-10-15), XP030115303,
- CHI CHING CHI ET AL: "Parallel Scalability and Efficiency of HEVC Parallelization Approaches", IEEE TRANSACTIONS ON CIRCUITS AND SYSTEMS FOR VIDEO TECHNOLOGY, INSTITUTE OF ELECTRICAL AND ELECTRONICS ENGINEERS, USA, vol. 22, no. 12, 1 December 2012 (2012-12-01), pages 1827-1838, XP011487165, ISSN: 1051-8215, DOI: 10.1109/TCSVT.2012.2223056
- PANG C ET AL: "Non-RCE3: Intra Motion Compensation with 2-D MVs", 14. JCT-VC MEETING; 25-7-2013 - 2-8-2013; VIENNA; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/,, no. JCTVC-N0256-v4, 2 August 2013 (2013-08-02), XP030114777,
- PANG C ET AL: "Non-RCE3: Pipeline Friendly Intra Motion Compensation", 14. JCT-VC MEETING; 25-7-2013 - 2-8-2013; VIENNA; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/,, no. JCTVC-N0254-v5, 1 August 2013 (2013-08-01), XP030114774,
- FLYNN D ET AL: "BoG report on Range Extensions topics", 15. JCT-VC MEETING; 23-10-2013 - 1-11-2013; GENEVA; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/,, no. JCTVC-O0352-v5, 1 November 2013 (2013-11-01), XP030115433,
- ZHU, LIHUA ET AL.: 'Initialization of block vector predictor for intra block copy' JOINT COLLABORATIVE TEAM ON VIDEO CODING (JCT-VC) OF ITU-T SG 16 WP 3 AND ISO/IEC JTC 1/SC 29/WG 11 16TH MEETING 09 January 2014, SAN JOSÉ, US, XP030115758
- CHANG, C.Y. ET AL.: 'A Two Level Mode Decision Algorithm for H. 264 High Profile Intra Encoding' CIRCUITS AND SYSTEMS (ISCAS), 2012 IEEE INTERNATIONAL SYSMPOSIUM. 31 May 2012, XP055370048
- PANG, CHAO ET AL.: 'Block vector prediction method for Intra block copy' JOINT COLLABORATIVE TEAM ON VIDEO CODING (JCT-VC) OF ITU-T SG 16 WP 3 AND ISO/IEC JTC 1/SC 29/WG 11 17TH MEETING 27 March 2014, VALENCIA, ES, XP030116035
- XU, XIAOZHONG ET AL.: 'SCCE1 Test 3.4: IntraBC BV prediction' JOINT COLLABORATIVE TEAM ON VIDEO CODING (JCT-VC) OF ITU-T SG 16 WP 3 AND ISO/IEC JTC 1/SC 29/WG 11 18TH MEETING 30 June 2014, SAPPORO, JP, XP030116305
- LAROCHE, G. ET AL.: 'AHG5: Motion prediction for Intra Block Copy' JOINT COLLABORATIVE TEAM ON VIDEO CODING (JCT-VC) OF ITU-T SG 16 WP 3 AND ISO/IEC JTC 1/SC 29/WG 11 15TH MEETING 23 October 2014, GENEVA, CH, XP030115401
- HE, YUWEN ET AL.: 'Non-SCCE1: Improvedintra block copy coding with block vector derivation' JOINT COLLABORATIVE TEAM ON VIDEO CODING (JCT-VC) OF ITU-T SG 16 WP 3 AND ISO/IEC JTC 1/SC 29/WG 11 18TH MEETING 30 June 2014, SAPPORO, JP, XP030116449
- PANG, CHAO ET AL.: 'Non-RCE3: Block vector signaling for intra block copy' JOINT COLLABORATIVE TEAM ON VIDEO CODING (JCT-VC) OF ITU-T SG 16 WP 3 AND ISO/IEC JTC 1/SC 29/WG 11 16TH MEETING 09 January 2014, SAN JOSE, US, XP030115663
- PANG, CHAO ET AL.: 'SCCE1 Test 3. 1-Block vector prediction method for Intra block copy' JOINT COLLABORATIVE TEAM ON VIDEO CODING (JCT-VC) OF ITU-T SG 16 WP 3 AND ISO/IEC JTC 1/SC 29/WG 11 18TH MEETING 30 June 2014, SAPPORO, JP, XP030116474
- PANG, CHAO ET AL.: 'Non-SCCE1: Combination of JCTVC-R0185 and JCTVC-R0203' JOINT COLLABORATIVE TEAM ON VIDEO CODING (JCT-VC) OF ITU-T SG 16 WP 3 AND ISO/IEC JTC 1/SC 29/WG 11 18TH MEETING 30 June 2014, SAPPORO, JP, XP030116625

## Description

### Technical Field

The present disclosure relates to the field of communication, and more particularly to methods, devices and electronic equipment for coding/decoding.

### Background

In a Screen Content Coding (SCC) standard, under setting, extended on the basis of an H.265/High Efficiency Video Coding (HEVC) standard, an Intra Block Copying (IBC) mode is adopted. Different from a conventional method of predicting pixel values in a current block using reconstructed pixels of adjacent blocks at boundaries of the current block in a current picture, IBC allows use of a reconstructed two-dimensional pixel block in the current picture as a predicted block of the current block. Meanwhile, IBC locates a prediction reference block using a relative offset between the predicted block and the current block, the offset being called as Block copying Vector(s) (BV(s)). Like a conventional intra prediction mode, Deblocking Filtering (DF) processing is not performed on a pixel sampling value in the predicted block to which the BV(s) points.

In the H.265/HEVC standard, an in-loop filtering process (including a DF and a Sample Adaptive Offset (SAO)) implements filtering processing by taking a picture as a unit, that is, the in-loop filtering process is executed before a picture is placed in a Decoded Picture Buffer (DPB) after being reconstructed. However, during practical product implementation, in-loop filtering is usually executed in a block layer, and an in-loop filtering operation may be executed without waiting until reconstruction of the whole picture is completed. Therefore, data processing efficiency of a coder and decoder including in-loop filtering modules may be improved by a method of reasonably arranging a processing pipeline in the block layer. For example, for the DF, under the condition that a pixel included in a current block is not adopted as an intra prediction reference pixel in an adjacent block and a pixel of the adjacent block has been available, the DF may be adopted for the current block; and for the SAO, when the pixel included in the current block is not adopted as the intra prediction reference pixel of the adjacent block, the SAO may be adopted for the current block. Since the SAO is a filter connected after the DF in series, a judgment condition of the DF may be adopted as a judgment condition for adoption of in-loop filtering for the current block in a unified manner. A block splitting manner for intra prediction is relatively regular and a location of an adopted reference pixel is fixed, so that a block layer in-loop filtering operation may be implemented in the coder and the decoder in a manner of executing an in-loop filtering processing pipeline with a delay of a fixed number of Coding Unit (CU) blocks (the condition of the DF is ensured to be met) after a block reconstruction pipeline.

As an extension of the H.265/HEVC standard, SCC continues using loop filters in the H.265/HEVC standard, and simultaneously introduces a novel coding tool such as IBC to improve coding efficiency for a screen content video. However, introduction of IBC makes it difficult to design and implement block layer in-loop filtering. An existing SCC structure mainly has the following problems.

IBC adopts pixels which have been reconstructed but yet not been subjected to in-loop filtering processing in a current picture to construct a predicted block of a current block, so that an in-loop filtering pipeline may perform in-loop filtering on pixels in a target block only when determining that the pixels in the target block will not be adopted to construct a predicted block of another IBC-mode block in the current picture, besides the abovementioned judgment conditions of the DF and SAO of the block layer. IBC adopts a BV to indicate a prediction reference block, so that pixels in any target block in the current picture may be adopted for a prediction reference block of any subsequent IBC block, and block layer in-loop filtering is not judged and executed by a simple method of delaying the in-loop filtering pipeline like the abovementioned intra prediction mode.

Specifically, for a coder, whether a pixel in a current coded block is adopted as an IBC reference of a subsequent coded block or not may not be determined, and the coder is required to determine an in-loop filtering parameter after block reconstruction of the whole picture is completed, perform in-loop filtering on the reconstructed picture and place the filtered picture in a DPB, so that a delay of one picture processing period is increased in a data processing flow. For a decoder, one manner is to execute an in-loop filtering operation after the picture is reconstructed, which increases the delay of a picture in the data processing flow; and the other manner is to analyze a bitstream in advance to determine a location of a reference block to which a BV of each IBC block points and then arrange an in-loop filtering pipeline to execute the block layer in-loop filtering operation, this manner upsets a structure between a bitstream analysis pipeline and a block layer reconstruction pipeline, and moreover, the in-loop filtering pipeline may not be executed according to a fixed time interval because the BVs are different in size, which increases complexity of the decoder.

Under a worst condition, according to a coding sequence (or decoding sequence), when an IBC prediction reference block of a last coded block (or decoded block) in the picture includes a pixel in a first coded block (or decoded block), the in-loop filtering pipeline may be executed only after reconstruction of the whole picture is completed, that is, the delay of a picture is required between the two processing pipelines of block layer reconstruction and in-loop filtering, so that data processing efficiency of the coder (or the decoder) is greatly reduced.

A string matching method for SCC also has the same problems. The string matching method may be considered to split a predicted block into IBC blocks with sizes of Nx1 or 1xN, wherein N is a width or height of the predicted block.

For the problem of reduction in data processing efficiency caused by the fact that a BV range may not be determined after introduction of IBC in a related technology, there is yet no effective solution.

The problem is to some extent addressed by the following prior art documents:
GUO L ET AL: "RExt: Signaling Motion Vector Range for Intra Block Copying", 15. JCT-VC MEETING; 23-10 to 1-11-2013; GENEVA; (JOINT COLLABORATIVE TEAM ON VIDEO CODING OF ISO/IEC JTC1/SC29/WG11 AND ITU-T SG.16); URL: HTTP://WFTP3.ITU.INT/AV-ARCH/JCTVC-SITE/, no. JCTVC-O0244, 15 Oct. 2013, the content of which is summarised and commented upon in this further document, on pages 18-19: FLYNN D ET AL: "BoG report on Range Extensions topics", 15. JCT-VC MEETING; 23-10 to 1-11-2013; GENEVA; (JOINT COLLABORATIVE TEAM ON VIDEO CODING OF ISO/IEC JTC1/SC29/WG11 AND ITU-T SG.16); URL: HTTP://WFTP3.ITU.INT/AV-ARCH/JCTVC-SITE/, no. JCTVC-O00352-v5, 1 Nov. 2013,
as well as by the international patent application with publication number WO 2015/196030 A1, published on 23 December 2015.

### Summary

In the embodiments of the present disclosure, methods and devices for coding/decoding are provided, so as to at least solve the problem of reduction in data processing efficiency caused by the fact that a BV range may not be determined after introduction of IBC in the related technology.

The invention is defined by the independent claims.

According to the embodiments of the present disclosure, a manner of determining the restricting range information about the BV(s) of the IBC mode and writing the restricting range information into the bitstream is adopted, so that the problem of reduction in data processing efficiency caused by the fact that a BV range may not be determined after introduction of IBC in the related technology is solved, the data processing efficiency may be improved, and meanwhile, smooth implementation of a coding or decoding process may also be ensured.

### Brief Description of the Drawings

The drawings described here are adopted to provide a further understanding to the present disclosure, and form a part of the present disclosure. Schematic embodiments of the present disclosure and descriptions thereof are adopted to explain the present disclosure and not intended to form improper limits to the present disclosure.
Fig. 1 is a flowchart of a coding method according to an embodiment of the present disclosure.
Fig. 2 is a structure block diagram of a coding device according to an embodiment of the present disclosure.
Fig. 3 is a flowchart of a decoding method according to an embodiment of the present disclosure.
Fig. 4 is a structure block diagram of a decoding device according to an embodiment of the present disclosure.
Fig. 5 s is a structure block diagram of electronic equipment according to an embodiment of the present disclosure.

### Detailed Description of the Embodiments

The present disclosure will be described below with reference to the drawings and the embodiments in detail. It is important to note that the embodiments in the present disclosure and characteristics in the embodiments may be combined under the condition of no conflicts. Furthermore, if the expression "embodiment" is used for subject-matter not falling under the scope of the appended claims, it should be understood as meaning "further example". In other words, only combinations of features falling under the scope of the appended claims represent embodiments of the present invention.

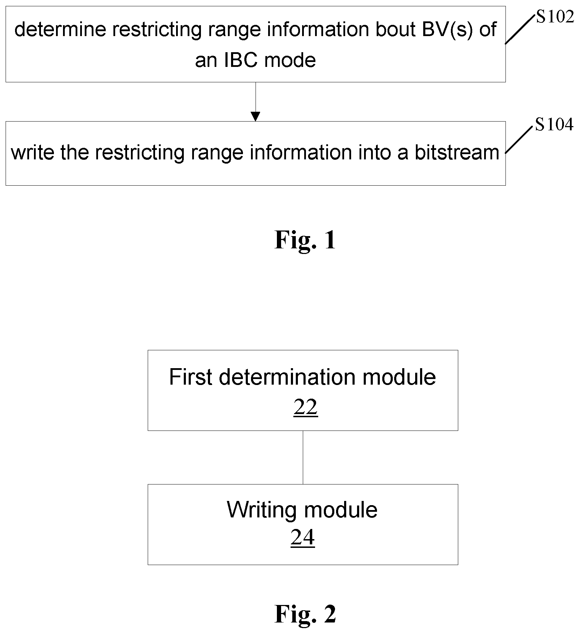

Considering influence after introduction of IBC, the embodiment provides a coding method. Fig. 1 is a flowchart of a coding method according to an embodiment of the present disclosure. As shown in Fig. 1, the method includes the following steps S102 to S104.

At step S102, restricting range information about a BV of an IBC mode is determined.

At step S104, the restricting range information is written into a bitstream.

According to the embodiment, by the steps, the restricting range information about the BV(s) is written into the bitstream in a coding process, and then other equipment may acquire the restricting range information about the BV(s) from the bitstream and further determine a restricting range of the BV(s), so that influence of IBC is effectively controlled, the problem of reduction in data processing efficiency caused by the fact that the BV(s) range may not be determined after introduction of IBC in the related technology is solved, the data processing efficiency may be improved, and meanwhile, smooth implementation of the coding or decoding process may also be ensured.

In certain embodiments, in-loop filtering may also be performed on a reconstructed block according to the restricting range information, wherein an implementation manner for in-loop filtering in the present disclosure may be block layer in-loop filtering. For a bitstream writing operation of a coder, the restricting range information about the BV(s) may be written into the bitstream immediately after being determined, and the restricting range information about the BV(s) may also be written into the bitstream at one time after a picture is coded.

In certain embodiments, the step that the restricting range information about the BV(s) of the IBC mode is determined may include at least one of that: a first restricting range of the BV(s) is determined according to an adopted profile, tier and level; a second restricting range of the BV(s) is determined according to boundaries of tiles and slices of the picture; a third restricting range of the BV(s) is determined according to a decode capability obtained by negotiating with a decoder; and an intersection of the first restricting range, the second restricting range and the third restricting range is determined as a fourth restricting range of the BV(s) of the IBC mode adopted in the coding process.

The step that the restricting range information is written into the bitstream may include that: information about the first restricting range of the BV(s) is written into at least one of the following data units: profile, tier and level information in a VPS and a profile, tier and level in an SPS; and/or, information about the fourth restricting range of the BV(s) is written into at least one of the following data units: data units except the profile, tier and level information in the VPS, data units except profile, tier and level information in the SPS, a PPS, slice segment header information, SEI and a user-defined data unit.

In certain embodiments, the step that in-loop filtering is performed on the reconstructed block according to the restricting range information may include that: a waiting time length between a block layer reconstruction process and an in-loop filtering process is determined according to the restricting range information. Specifically, a last block unit where an IBC block adopting pixels in a current first block unit as references is located is determined as a second block unit according to the restricting range information; determining the first block unit, the second block unit, and block units between the first block unit and the second block unit as an eighth range according to a coding sequence; a union of the eighth range and a block unit range adopted for a conventional intra prediction mode is determined as a ninth range; and a number of block units included between the first block unit and a last block unit of the ninth range is determined as the waiting time length. In addition, after the waiting time length is determined, the in-loop filtering process may be started to be executed the waiting time length after the block layer reconstruction process is started to be executed.

The conventional intra prediction mode directly adopts adjacent pixels of a current coded block as reference pixels to construct a predicted block, wherein locations of the adjacent pixels in the conventional intra prediction mode are preset, and are not indicated by location offset vectors.

It is important to note that the block units mentioned in the present disclosure may include at least one of: a maximum CU, a minimum CU, a Transform Unit (TU), a minimum TU and the like. In the abovementioned execution process, the current coded block may refer to a CU, a Prediction Unit (PU) and a TU, and the predicted block in the conventional intra prediction mode is a predicted block constructed for a TU.

The ninth range may also be limited within a tile and/or slice range where the first block unit is located according to tile partition information about the current picture and/or a starting location of a slice where the first block unit is located.

The block unit range adopted for the conventional intra prediction mode may include at least one of the following ranges or a union of at least two of the following ranges: a range of block units adopting pixels at right boundaries and lower boundaries of block units which may be adopted as intra prediction references may be determined as a fifth range according to the coding sequence of block units, sizes of the block units and a maximum number of adjacent reference pixels required to be adopted in an intra prediction process; and adjacent block units adopted for DF of the block units may be determined, a range of the block units of which pixels at lower boundaries are adopted as intra prediction references may be determined as a sixth range for the right adjacent block units, and a range of the block units of which pixels at right boundaries are adopted as intra prediction references may be determined as a seventh range for the lower adjacent block units.

In certain embodiments, the step that in-loop filtering is performed on the reconstructed block according to the restricting range information includes that: whether in-loop filtering processing may be performed on an existing local reconstructed block or not is determined according to the restricting range information. Specifically, after local reconstruction of a current block unit is completed, whether a block unit which has been reconstructed before the current block unit but yet not been subjected to in-loop filtering processing meets the following three conditions are judged according to the coding sequence.

Condition one: pixels at a right boundary and lower boundary of the local reconstructed block unit to be judged are not adopted for pixels in a block unit after the current local reconstructed unit as intra prediction references.

Condition two: pixels at a lower boundary of an adjacent block unit at the right boundary of the local reconstructed block unit to be judged are not adopted for the pixels in the block unit after the current local reconstructed block unit as the intra prediction references.

Condition three: pixels at a right boundary of an adjacent block unit at the lower boundary of the local reconstructed block unit to be judged are not adopted for the pixels in the block unit after the current local reconstructed block unit as the intra prediction references.

The in-loop filtering processing is performed according to a meeting situation of the local reconstructed block unit to be judged for the conditions.

Specifically, the step that in-loop filtering processing is performed according to the meeting situation of the local reconstructed block unit to be judged for the conditions includes at least one of that:
when the condition one, the condition two and the condition three are simultaneously met, DF processing which is not performed in a horizontal direction and/or a vertical direction is completed on the local reconstructed block unit to be judged, locations of filtered boundaries of local reconstructed blocks of adjacent coded blocks of the local reconstructed block unit and an attribute of a filtering operation are flagged, and filtering processing is performed on local reconstructed blocks output from DF processing using an SAO;
when the condition one and condition two are met, a DF module in an in-loop filtering module performs DF in the horizontal direction on pixels to be filtered on which DF is not performed in the horizontal direction in the local reconstructed block unit to be judged, and flags locations of their filtered boundaries and an attribute of a filtering operation, whether DF has been performed in both the vertical direction and the horizontal direction on the local reconstructed blocks output from DF processing or not is judged, and if yes, then the filtering processing is performed by using the SAO; and
when the condition one and the condition three are met, the DF module in the in-loop filtering module performs DF in the vertical direction on pixels to be filtered on which DF is not performed in the vertical direction in the local reconstructed block unit to be judged, and flags locations of their filtered boundaries and an attribute of a filtering operation, whether DF has been performed in both the vertical direction and the horizontal direction on the local reconstructed blocks output from DF processing is judged, if yes, then the filtering processing is performed by using the SAO,
otherwise the filtering processing is not performed on the local reconstructed block unit to be judged using a DF and the SAO.

In certain embodiments, the step that block layer in-loop filtering is performed on the reconstructed block according to the restricting range information may include that: a waiting time length for in-loop filtering of the current local constructed block unit is determined according to the restricting range information. Specifically, it is determined that the current local reconstructed block unit simultaneously meets the following three conditions.

Condition one: the pixels at the right boundary and lower boundary of the local reconstructed block unit to be judged are not adopted for the pixels in the block unit after the current local reconstructed unit as the intra prediction references.

Condition two: the pixels at the lower boundary of the adjacent block unit at the right boundary of the local reconstructed block unit to be judged are not adopted for the pixels in the block unit after the current local reconstructed block unit as the intra prediction references.

Condition three: the pixels at the right boundary of the adjacent block unit at the lower boundary of the local reconstructed block unit to be judged are not adopted for the pixels in the block unit after the current local reconstructed block unit as the intra prediction references.

In certain embodiments, the in-loop filtering processing is performed on the current local reconstructed block unit after a local reconstruction module outputs reconstruction values of pixels covered by M block units after the current local reconstructed block according to the coding sequence, wherein M may be a minimum number of block units included between the current local reconstructed block unit and a corresponding block unit.

The step that in-loop filtering processing is performed on the current local reconstructed block unit may include that: DF processing which is not performed in the horizontal direction and/or the vertical direction is completed on the local reconstructed block unit, and the locations of the filtered boundaries of the local reconstructed blocks of the adjacent coded blocks of the local reconstructed block unit and the attribute of the filtering operation are flagged; and filtering processing is performed on the local reconstructed blocks output from DF processing by using the SAO.

Specifically, the step that the waiting time length for in-loop filtering of the current local reconstructed block unit is determined according to the restricting range information may further include that: when the current local reconstructed block unit simultaneously meets the following condition one and condition two, the number of the block units included between the current local reconstructed block unit and the corresponding block unit is eM, and when the current local reconstructed block unit simultaneously meets the following condition one and condition three, the number of the block units included between the current local reconstructed block unit and the corresponding block unit is vM, wherein
condition one: the pixels at the right boundary and lower boundary of the local reconstructed block unit to be judged are not adopted for the pixels in the block unit after the current local reconstructed unit as the intra prediction references,
condition two: the pixels at the lower boundary of the adjacent block unit at the right boundary of the local reconstructed block unit to be judged are not adopted for the pixels in the block unit after the current local reconstructed block unit as the intra prediction references, and
condition three: the pixels at the right boundary of the adjacent block unit at the lower boundary of the local reconstructed block unit to be judged are not adopted for the pixels in the block unit after the current local reconstructed block unit as the intra prediction references; and
the in-loop filtering processing is performed on the current local reconstructed block unit according to a relationship between eM and vM.

Specifically, the step that in-loop filtering processing is performed on the current local reconstructed block unit according to the relationship between eM and vM may include at least one of the following three situations.

Situation one: a value of eM is equal to vM.

Under the situation one, in-loop filtering processing is performed on the current local reconstructed block unit after local reconstruction values of pixels covered by eM or vM block units after the current local reconstructed block unit are output according to the coding sequence.

DF processing which is not performed in the horizontal direction and/or the vertical direction is completed on the current local reconstructed block unit, the locations of the filtered boundaries of the local reconstructed blocks of the adjacent coded blocks of the current local reconstructed block unit and the attribute of the filtering operation are flagged.

The filtering processing is performed on the local reconstructed blocks output from DF processing by using the SAO.

Situation two: the value of eM is smaller than vM.

Under the situation two, DF in the vertical direction may be performed on the current local reconstructed block unit after the local reconstruction values of the pixels covered by the eM block units after the current local reconstructed block unit are output according to the coding sequence, completion of DF in the vertical direction may be flagged, DF in the horizontal direction may be continued to be performed on the current local reconstructed block unit after the local reconstruction module outputs reconstruction values of pixels covered by vM-eM block units, completion of DF in the horizontal direction may be flagged.

The filtering processing may be performed on the local reconstructed blocks output from DF processing by using the SAO.

Situation three: the value of eM is larger than vM,

Under the situation three, DF in the horizontal direction may be performed on the current local reconstructed block unit after the local reconstruction values of the pixels covered by the vM block units after the current local reconstructed block unit are output according to the coding sequence, completion of DF in the horizontal direction may be flagged, DF in the vertical direction may be continued to be performed on the current local reconstructed block unit after the local reconstruction module outputs reconstruction values of pixels covered by eM-vM block units, completion of DF in the vertical direction may be flagged.

The filtering processing may be performed on the local reconstructed blocks output from DF processing by using the SAO.

Corresponding to the abovementioned coding method, the embodiment further provides a coding device. The device is configured to implement the abovementioned embodiment and preferred implementation modes, and what has been described will not be elaborated. For example, term "module", used below, may be a combination of software and/or hardware capable of realizing a preset function. Although the device described in the following embodiment is preferably implemented with software, implementation with hardware or a combination of the software and the hardware is also possible and conceivable.

Fig. 2 is a structure block diagram of a coding device according to an embodiment of the present disclosure. As shown in Fig. 2, the device includes a first determination module 22 and a writing module 24. Each module will be described below in detail.

The first determination module 22 is configured to determine restricting range information about a BV of an IBC mode; and the writing module 24 is connected with the first determination module 22, and is configured to write the restricting range information into a bitstream.

The embodiment may further include a first in-loop filtering module, connected with the writing module 24 and configured to perform in-loop filtering on a reconstructed block according to the restricting range information.

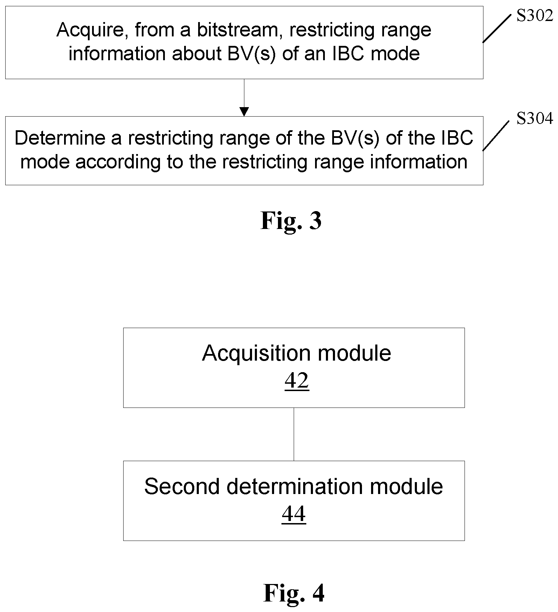

The embodiment further provides a decoding method. Fig. 3 is a flowchart of a decoding method according to an embodiment of the present disclosure. As shown in Fig. 3, the method includes the following steps S302 to S304.

At step S302, restricting range information about a BV of an IBC mode is acquired from a bitstream.

At step S304, a restricting range of the BV(s) of the IBC mode is determined according to the restricting range information, wherein a BV range in the bitstream may be different from the finally determined BV range, and for example, multiple restricting ranges are given in the bitstream (an upper restricting range is given by a profile/level, and a practically adopted range is given by another field), and an intersection or union of the multiple restricting ranges may be finally adopted.

According to the embodiment, by the steps, the restricting range information about the BV(s) is acquired from the bitstream in a decoding process, and the restricting range of the BV(s) is further determined, so that influence of IBC is effectively controlled, the problem of reduction in data processing efficiency caused by the fact that the BV(s) range may not be determined after introduction of IBC in the related technology is solved, the data processing efficiency may be improved, and meanwhile, smooth implementation of the coding or decoding process may also be ensured.

In certain embodiments, in-loop filtering may also be performed on a reconstructed block according to the restricting range, wherein an implementation manner for in-loop filtering in the present disclosure may be block layer in-loop filtering.

In certain embodiments, the step that block layer in-loop filtering is performed on the reconstructed block according to the restricting range information includes that: a waiting time length between a block layer reconstruction process and an in-loop filtering process is determined according to the restricting range information. Specifically, a last block unit where an IBC block adopting pixels in a current first block unit as references is located may be determined as a second block unit according to the restricting range information; the first block unit, the second block unit, and block units between them may be determined as a fourth range according to a decoding sequence; a union of the fourth range and a block unit range adopted for a conventional intra prediction mode may be determined as a fifth range; and a number of block units included between the first block unit and a last block unit of the fifth range may be determined as the waiting time length.

The conventional intra prediction mode directly adopts adjacent pixels of a current coded block as reference pixels to construct a predicted block, and locations of the adjacent pixels in the conventional intra prediction mode are preset, and may not be indicated by location offset vectors.

In addition, the in-loop filtering process may be started to be executed the waiting time length after the block layer reconstruction process is started to be executed.

The fifth range may also be limited within a tile and/or slice range where the first block unit is located according to tile partition information about a current picture and/or a starting location of a slice where the first block unit is located.

The block unit range adopted for the conventional intra prediction mode may include at least one of the following ranges or a union of at least two of the following ranges: a range of block units adopting pixels at right boundaries and lower boundaries of block units which may be adopted as intra prediction references may be determined as a first range according to the decoding sequence of block units, sizes of the block units and a maximum number of adjacent reference pixels required to be adopted in an intra prediction process; and adjacent block units adopted for DF of the block units may be determined, a range of the block units of which pixels at lower boundaries are adopted as intra prediction references may be determined as a second range for the right adjacent block units, and a range of the block units of which pixels at right boundaries are adopted as intra prediction references may be determined as a third range for the lower adjacent block units.

In certain embodiments, the step that in-loop filtering is performed on the reconstructed block according to the restricting range information includes that: whether in-loop filtering processing may be performed on an existing local reconstructed block or not is determined according to the restricting range information. Specifically, after local reconstruction of a current block unit is completed, whether a block unit which has been reconstructed before the current block unit but yet not been subjected to in-loop filtering processing meets the following three conditions is judged according to the decoding sequence.

Condition one: pixels at a right boundary and lower boundary of the local reconstructed block unit to be judged are not adopted for pixels in a block unit after the current local reconstructed unit as intra prediction references.

Condition two: pixels at a lower boundary of an adjacent block unit at the right boundary of the local reconstructed block unit to be judged are not adopted for the pixels in the block unit after the current local reconstructed block unit as the intra prediction references.

Condition three: pixels at a right boundary of an adjacent block unit at the lower boundary of the local reconstructed block unit to be judged are not adopted for the pixels in the block unit after the current local reconstructed block unit as the intra prediction references.

The in-loop filtering processing is performed according to a meeting situation of the local reconstructed block unit to be judged for the conditions.

The step that in-loop filtering processing is performed according to the meeting situation of the local reconstructed block unit to be judged for the conditions may include at least one of that:
when the condition one, the condition two and the condition three are simultaneously met, DF processing which is not performed in a horizontal direction and/or a vertical direction is completed on the local reconstructed block unit to be judged, locations of filtered boundaries of local reconstructed blocks of adjacent coded blocks of the local reconstructed block unit and an attribute of a filtering operation are flagged, and filtering processing is performed on local reconstructed blocks output from DF processing using an SAO;
when the condition one and condition two are met, a DF module in an in-loop filtering module performs DF in the horizontal direction on pixels to be filtered on which DF is not performed in the horizontal direction in the local reconstructed block unit to be judged, and flags locations of their filtered boundaries and an attribute of a filtering operation, whether DF has been performed in both the vertical direction and the horizontal direction on the local reconstructed blocks output from DF processing or not is judged, and if yes, then the filtering processing is performed by using the SAO; and
when the condition one and the condition three are met, the DF module in the in-loop filtering module performs DF in the vertical direction on pixels to be filtered on which DF is not performed in the vertical direction in the local reconstructed block unit to be judged, and flags locations of their filtered boundaries and an attribute of a filtering operation, whether DF has been performed in both the vertical direction and the horizontal direction on the local reconstructed blocks output from DF processing is judged, if yes, then the filtering processing is performed by using the SAO,
otherwise filtering processing is not performed on the local reconstructed block unit to be judged using a DF and the SAO.

In certain embodiments, the step that in-loop filtering is performed on the reconstructed block according to the restricting range information further includes that: a waiting time length for in-loop filtering of the current local constructed block unit is determined according to the restricting range information. Specifically, it is determined that the current local reconstructed block unit simultaneously meets the following three conditions.

Condition one: the pixels at the right boundary and lower boundary of the local reconstructed block unit to be judged are not adopted for the pixels in the block unit after the current local reconstructed unit as the intra prediction references.

Condition two: the pixels at the lower boundary of the adjacent block unit at the right boundary of the local reconstructed block unit to be judged are not adopted for the pixels in the block unit after the current local reconstructed block unit as the intra prediction references.

Condition three: the pixels at the right boundary of the adjacent block unit at the lower boundary of the local reconstructed block unit to be judged are not adopted for the pixels in the block unit after the current local reconstructed block unit as the intra prediction references.

In certain embodiments, the in-loop filtering processing is performed on the current local reconstructed block unit after a local reconstruction module outputs reconstruction values of pixels covered by M block units after the current local reconstructed block according to the decoding sequence, wherein M may be a minimum number of block units included between the current local reconstructed block unit and a corresponding block unit.

The step that in-loop filtering processing is performed on the current local reconstructed block unit may include that: DF processing which is not performed in the horizontal direction and/or the vertical direction is completed on the local reconstructed block unit, and the locations of the filtered boundaries of the local reconstructed blocks of the adjacent coded blocks of the local reconstructed block unit and the attribute of the filtering operation are flagged; and filtering processing is performed on the local reconstructed blocks output from DF processing by using the SAO.

Specifically, the step that the waiting time length for in-loop filtering of the current local reconstructed block unit is determined according to the restricting range information may include that:
when the current local reconstructed block unit simultaneously meets condition one and condition two, the number of the block units included between the current local reconstructed block unit and the corresponding block unit is eM, and when the current local reconstructed block unit simultaneously meets condition one and condition three, the number of the block units included between the current local reconstructed block unit and the corresponding block unit is vM, wherein
condition one: the pixels at the right boundary and lower boundary of the local reconstructed block unit to be judged are not adopted for the pixels in the block unit after the current local reconstructed unit as the intra prediction references,
condition two: the pixels at the lower boundary of the adjacent block unit at the right boundary of the local reconstructed block unit to be judged are not adopted for the pixels in the block unit after the current local reconstructed block unit as the intra prediction references, and
condition three: the pixels at the right boundary of the adjacent block unit at the lower boundary of the local reconstructed block unit to be judged are not adopted for the pixels in the block unit after the current local reconstructed block unit as the intra prediction references; and
the in-loop filtering processing is performed on the current local reconstructed block unit according to a relationship between eM and vM.

The step that in-loop filtering processing is performed on the current local reconstructed block unit according to the relationship between eM and vM may include at least one of the following three situations.

Situation one: a value of eM is equal to vM.

Under the situation one, in-loop filtering processing is performed on the current local reconstructed block unit after local reconstruction values of pixels covered by eM or vM block units after the current local reconstructed block unit are output according to the decoding sequence. DF processing which is not performed in the horizontal direction and/or the vertical direction is completed on the current local reconstructed block unit, the locations of the filtered boundaries of the local reconstructed blocks of the adjacent coded blocks of the current local reconstructed block unit and the attribute of the filtering operation are flagged. The filtering processing is performed on the local reconstructed blocks output from DF processing by using the SAO.

Situation two: the value of eM is smaller than vM.

Under the situation two, DF in the vertical direction is performed on the current local reconstructed block unit after the local reconstruction values of the pixels covered by the eM block units after the current local reconstructed block unit are output according to the decoding sequence, completion of DF in the vertical direction is flagged, DF in the horizontal direction is continued to be performed on the current local reconstructed block unit after the local reconstruction module outputs reconstruction values of pixels covered by vM-eM block units, completion of DF in the horizontal direction is flagged. The filtering processing is performed on the local reconstructed blocks output from DF processing by using the SAO.

Situation three: the value of eM is larger than vM.

Under the situation three, DF in the horizontal direction is performed on the current local reconstructed block unit after the local reconstruction values of the pixels covered by the vM block units after the current local reconstructed block unit are output according to the decoding sequence, completion of DF in the horizontal direction is flagged, DF in the vertical direction is continued to be performed on the current local reconstructed block unit after the local reconstruction module outputs reconstruction values of pixels covered by eM-vM block units, completion of DF in the vertical direction is flagged. The filtering processing is performed on the local reconstructed blocks output from DF processing by using the SAO.

In certain embodiments, the step that the restricting range information about the BV(s) of the IBC mode is acquired from the bitstream may include that: information about a first restricting range of the BV(s) is acquired from at least one of the following data units: profile, tier and level information in a VPS and a profile, tier and level in an SPS; and/or, data units except the profile, tier and level information in the VPS, data units except profile, tier and level information in the SPS, a PPS, slice segment header information, SEI and a user-defined data unit.

Corresponding to the abovementioned decoding method, the embodiment further provides a decoding device. The device is configured to implement the abovementioned embodiment and preferred implementation modes, and what has been described will not be elaborated. For example, term "module", used below, may be a combination of software and/or hardware capable of realizing a preset function. Although the device described in the following embodiment is preferably implemented with software, implementation with hardware or a combination of the software and the hardware is also possible and conceivable.

Fig. 4 is a structure block diagram of a decoding device according to an embodiment of the present disclosure. As shown in Fig. 4, the device includes an acquisition module 42 and a second determination module 44. Each module will be described below in detail.

The acquisition module 42 is configured to acquire restricting range information about a BV of an IBC mode from a bitstream; and the second determination module 44 is connected with the acquisition module 42, and is configured to determine a restricting range of the BV(s) of the IBC mode according to the restricting range information.

In certain embodiments, the device may further include a second in-loop filtering module, connected with the second determination module 44 and configured to perform in-loop filtering according to a reconstructed block according to the restricting range information.

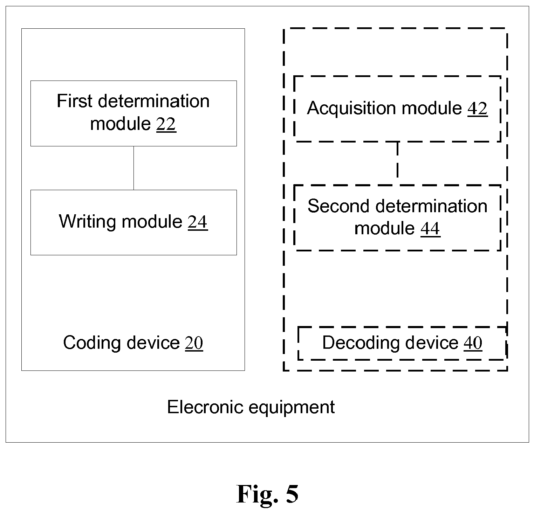

The embodiment further provides electronic equipment. Fig. 5 is a structure block diagram of electronic equipment according to an embodiment of the present disclosure. As shown in Fig. 5, the electronic equipment includes the coding device 20 shown in Fig. 2, and/or, includes the decoding device 40 shown in Fig. 4.

In certain embodiments, the electronic equipment may include: related bitstream generation equipment and/or receiving and playing equipment for a video communication application. Specifically, the electronic equipment may be: a mobile phone, a computer, a server, a set-top box, a portable mobile terminal, a digital camera and television broadcasting system equipment.

Descriptions will be made below with reference to exemplary embodiments, and the following exemplary embodiments combine the abovementioned embodiments and preferred implementation modes thereof.

In the following exemplary embodiments, descriptions will be made with application of a restricting range of a BV to the field of coding and decoding, and loop-filtering-based coding and decoding methods and devices and equipment in the field of video coding and decoding are provided.

The coding method includes that: a restricting range of a BV of an IBC mode is determined; restricting range information about the BV(s) is written into a bitstream; and block layer in-loop filtering is performed on a reconstructed block according to the restricting range of the BV(s). That is, range information about an offset vector between a current block and a prediction reference block is written into the bitstream.

The decoding method includes that: the bitstream is analyzed to obtain the restricting range of the BV(s) of the IBC mode; and block layer in-loop filtering is performed on the reconstructed block according to the restricting range of the BV(s). That is, the bitstream is analyzed to obtain the range information about the offset vector between the current block and the prediction reference block; and an in-loop filtering operation is executed on a block in a decoded picture according to the range information about the offset vector.

### Embodiment one

The exemplary embodiment provides a loop-filtering-based decoding method, which is configured for a decoding process or decoder adopting an IBC mode. It is important to note that the method of the embodiment does not limit a predicted block splitting manner for IBC, may adopt a conventional rectangular and square block splitting manner, and may also adopt Nx1 or 1xN string splitting. A string matching method is a special case when an Nx1 or 1xN string splitting manner is adopted for IBC.

The loop-filtering-based decoding method of the embodiment is described below.

At step S702, the decoder analyzes a video bitstream to obtain range information about BV(s) in an IBC mode.

The BV is configured to indicate a relative offset between a decoded block adopting the IBC mode and a prediction reference block thereof.

The decoder may acquire the range information about the BV(s) from the bitstream by analyzing at least one of the following units, including:
profile, tier and level information in a VPS;
data units except the profile, tier and level information in the VPS;
profile, tier and level information in an SPS;
data units except the profile, tier and level information in the SPS;
a PPS;
slice segment header information;
SEI; and
a user-defined data unit.

At step S704, the decoder determines a waiting time length between a block layer reconstruction process and an in-loop filtering process according to the range information about the BV.

Two filters are involved in the in-loop filtering process: a DF and an SAO. Since reconstructed values of sampling values of pixels which are not subjected to in-loop filtering processing are required by construction of a prediction reference block in an intra prediction block decoding process, the decoder may execute the in-loop filtering process only after all pixels in a block to be processed are not adopted as intra prediction references of a subsequent decoded block.

For the DF, not only are pixels in a current processed block required to be adopted, but also reconstructed pixels of an adjacent block are required. Therefore, the decoder may execute DF only after the pixels of both the current block and the adjacent block are not adopted as intra prediction references.

The decoder executes the SAO after DF. Meanwhile, the SAO only adopts reconstructed pixels in the current processed block. Therefore, the decoder may execute the SAO after DF is executed.

For a conventional intra prediction mode of adopting adjacent pixels as prediction references, the decoder analyzes a parameter set bitstream to obtain sizes of related block units in a decoding process, and determines a required waiting time length after execution of a block reconstruction module and before execution of an in-loop filtering module. These block units include at least one of: a maximum CU, a minimum CU, a matrix TU and a minimum TU. Here, that the waiting time length is equal to N indicates that: an in-loop filtering operation is executed on a reconstructed block after a delay of N block units.

Specifically, for the conventional intra prediction mode, pixels at a right boundary and lower boundary of the current processed block may be adopted as the intra prediction references of the subsequent decoded block according to a decoding sequence. Descriptions will be made with adoption of maximum CUs as an example, and situations of adoption of other block units are similar.

The conventional intra prediction mode directly adopts adjacent pixels of a current decoded block as reference pixels to construct a predicted block. Locations of the adjacent pixels in the conventional intra prediction mode are preset, and are not indicated by location offset vectors.

The decoder determines a range (i.e. a first range) of maximum CUs adopting pixels at right boundaries and lower boundaries of maximum CUs which may be adopted as intra prediction references according to a decoding sequence of maximum CUs, sizes of the maximum CUs and a maximum number of adjacent reference pixels required to be adopted in an intra prediction process. Meanwhile, the decoder determines adjacent maximum CUs adopted for DF of the maximum CUs, determines a range (i.e. a second range) of the maximum CUs of which pixels at lower boundaries are adopted as intra prediction references for the left adjacent maximum CUs, and determines a range (i.e. a third range) of the maximum CUs of which pixels at right boundaries are adopted as intra prediction references for the lower adjacent block units.

For the IBC mode, the decoder determines a location (recorded as a "second CU") of a last maximum CU where an IBC block adopting pixels in the maximum CU (recorded as a "first CU") as references is located according to the range information about the BV(s) and the decoding sequence. The first CU, the second CU, and a maximum CU between the first CU and the second CU are determined as the fourth range (including the second CU) according to the decoding sequence of the maximum CUs.

The decoder sets a union of the first range, the second range, the third range and the fourth range as a the fifth range , and limits the fifth range within a tile and slice range where the maximum CU is located according to tile partition information about a current picture and a starting location of a slice where the maximum CU is located. The decoder determines a number of maximum CUs (not including the maximum CU but including a last maximum CU in the fifth range) included between the maximum CU and the last maximum CU in the fifth range as the waiting time length, recorded as M, between the block layer reconstruction process and the in-loop filtering process.

At step S706, after obtaining a reconstructed block of a decoded block, the decoder performs DF and SAO on the reconstructed block through an in-loop filtering module after the waiting time length.

Adoption of the maximum CUs in step S704 as a block unit is taken as an example, and situations of adopting other block units are similar.

Preferably, after reconstruction of the current maximum CU (which is flagged as the "first maximum CU)" is completed, the decoder sequentially performs DF and SAO processing on reconstructed data of the first maximum CU through the in-loop filtering module after completing reconstruction of M subsequent maximum CUs according to the decoding sequence.

Preferably, the block reconstruction module in the decoder starts reconstruction from a first maximum CU in a slice or the picture according to the decoding sequence, and writes reconstructed data of the maximum CUs into a buffer. When the reconstruction module starts processing an (M+2)th maximum CU in the slice or the picture, the in-loop filtering module starts sequentially performing in-loop filtering processing on the reconstructed data of each maximum CU from the first maximum CU in the slice or the picture according to the decoding sequence.

The in-loop filtering module completes DF processing which is not performed in a horizontal direction and/or a vertical direction on the maximum CUs, and a DF module flags locations of filtered boundaries of reconstructed blocks of adjacent decoded blocks of the first maximum CU and an attribute of a filtering operation (including filtering in the horizontal direction and filtering in the vertical direction).

The in-loop filtering module performs filtering processing on reconstructed blocks output by the DF module and obtained by filtering processing by using the SAO, and writes data output by an SAO module into a DPB.

### Embodiment two

In embodiment one, a decoder selects a certain block unit, and determines a maximum waiting time length in a manner of counting based on the selected block unit. An in-loop filtering module starts performing in-loop filtering processing on a reconstructed block after the maximum waiting time length. The present embodiment provides a decoding method capable of dynamically performing block layer in-loop filtering, which is configured for a decoding process or decoder adopting an IBC mode. It is important to note that the method of the embodiment does not limit a predicted block splitting manner for IBC, may adopt a conventional rectangular and square block splitting manner, and may also adopt Nx1 or 1xN string splitting. A string matching method is a special case when an Nx1 or 1xN string splitting manner is adopted for IBC.

Step S802 is completely the same as the step S702.

At step S804, the decoder determines indication information about whether in-loop filtering processing may be performed on a decoded block or not according to range information about a BV.

The decoder records a splitting situation of CUs in each Coding Tree Unit (CTU) in an execution process of a reconstruction module. The decoder may record the splitting situation of the CUs in the CTUs by a method of directly storing values of split_cu_flag in the CTU and the CUs, wherein the values of the split_cu_flag may be obtained by directly analyzing a block layer bitstream.

After completing reconstruction of a current CU, the decoder makes a judgment to a CU which has been reconstructed before the current CU but yet not been subjected to in-loop filtering processing about the following three conditions according to a decoding sequence.

Condition one: pixels at a right boundary and lower boundary of the reconstructed CU to be judged are not adopted for pixels in a CU after the current reconstructed CU (according to the decoding sequence) as intra prediction references.

Condition two: pixels at a lower boundary of an adjacent CU at the right boundary of the reconstructed CU to be judged are not adopted for the pixels in the CU after the current reconstructed CU (according to the decoding sequence) as the intra prediction references.

Condition three: pixels at a right boundary of an adjacent CU at the lower boundary of the reconstructed CU to be judged are not adopted for the pixels in the CU after the current reconstructed CU (according to the decoding sequence) as the intra prediction references.

When the above three conditions are simultaneously met, the decoder flags the reconstructed CU to be judged as "loop filtering processing may be performed"; when condition one and condition two are met, the decoder flags the reconstructed CU to be judged as "DF in a horizontal direction may be performed"; and when condition one and condition three are met, the decoder flags the reconstructed CU to be judged as "DF in a vertical direction may be performed". Under other conditions, the decoder flags the reconstructed CU to be judged as "loop filtering processing may not be performed".

At step S806, the in-loop filtering module performs in-loop filtering processing on a CU according to flag information thereof.

### Situation one:

When the flag information about the reconstructed CU is "loop filtering processing may be performed", the in-loop filtering module completes DF processing which is not performed in the horizontal direction and/or the vertical direction on the CU, and a DF module flags locations of filtered boundaries of reconstructed blocks of adjacent decoded blocks of the CU and an attribute of a filtering operation (including filtering in the horizontal direction and filtering in the vertical direction).

The in-loop filtering module performs filtering processing on reconstructed blocks output by the DF module and obtained by filtering processing using an SAO, and writes data output by an SAO module into a DPB.

### Situation two:

When the flag information about the reconstructed CU is "DF in the vertical direction may be performed" or "DF in the horizontal direction may be performed", the DF module in the in-loop filtering module performs DF in the vertical direction or the horizontal direction on pixels to be filtered on which DF is not performed in the vertical direction or the horizontal direction in the CU, and flags locations of their filtered boundaries and an attribute of a filtering operation (including filtering in the horizontal direction and filtering in the vertical direction).

If DF has been performed in the vertical direction and the horizontal direction on the reconstructed CU, the in-loop filtering module filters the reconstructed CU by using the SAO, and writes the data output by the SAO module into the DPB, otherwise the in-loop filtering module does not filter on the reconstructed CU by using the SAO, temporally stores the reconstructed CU in the buffer, and waits for a further operation instruction related to DF, the operation instruction related to DF including one of: "loop filtering processing may be performed", "DF in the vertical direction may be performed" and "DF in the horizontal direction may be performed".

### Situation three:

When the flag information about the reconstructed CU is "loop filtering processing may not be performed", the in-loop filtering module does not perform filtering processing on the reconstructed CU using the DF and the SAO.

### Embodiment three

In the method of embodiment 2, a decoder judges whether in-loop filtering processing may be performed on CUs which have been reconstructed before or not after reconstruction of a current CU, and filters a CU on which all or part of in-loop filtering processing may be performed. The present embodiment provides a decoding method of directly setting an in-loop filtering flag for a current reconstructed CU, which is configured for a decoding process or decoder adopting an IBC mode. It is important to note that the method of the embodiment does not limit a predicted block splitting manner for IBC, may adopt a conventional rectangular and square block splitting manner, and may also adopt Nx1 or 1xN string splitting. A string matching method is a special case when an Nx1 or 1xN string splitting manner is adopted for IBC.

Step S902 is completely the same as Step S702.

At step S904, the decoder determines a waiting time length parameter for in-loop filtering of the current reconstructed CU according to range information about a BV.

The decoder records a splitting situation of CUs in each CTU in an execution process of a reconstruction module. The decoder may record the splitting situation of the CUs in the CTUs by a method of directly storing values of split_cu_flag in the CTU and the CUs, wherein the values of the split_cu_flag may be obtained by directly analyzing a block layer bitstream.

The decoder determines a number M of minimum CUs included between the current CU and a corresponding CU when the current reconstructed CU simultaneously meets the following three conditions according to a decoding sequence by taking a minimum CU as a unit.

Condition one: pixels at a right boundary and lower boundary of the reconstructed CU to be judged are not adopted for pixels in a CU after the current reconstructed CU (according to the decoding sequence) as intra prediction references.

Condition two: pixels at a lower boundary of an adjacent CU at the right boundary of the reconstructed CU to be judged are not adopted for the pixels in the CU after the current reconstructed CU (according to the decoding sequence) as the intra prediction references.

Condition three: pixels at a right boundary of an adjacent CU at the lower boundary of the reconstructed CU to be judged are not adopted for the pixels in the CU after the current reconstructed CU (according to the decoding sequence) as the intra prediction references.

At step S906, an in-loop filtering module performs in-loop filtering processing on the current reconstructed CU after the reconstruction module outputs reconstruction values of pixels covered by M minimum CUs after the current reconstructed CU according to the decoding sequence.

The in-loop filtering module completes DF processing which is not performed in a horizontal direction and/or a vertical direction on the CU, and a DF module flags locations of filtered boundaries of reconstructed blocks of adjacent decoded blocks of the CU and an attribute of a filtering operation (including filtering in the horizontal direction and filtering in the vertical direction).

The in-loop filtering module performs filtering processing on reconstructed blocks output by the DF module and obtained by filtering processing using an SAO, and writes data output by an SAO module into a DPB.

### Embodiment four

On the basis of embodiment three, a more flexible waiting time length is adopted to make fuller use of processing resources of a decoder. The present embodiment provides a decoding method of directly setting an in-loop filtering flag for a current reconstructed CU, which is configured for a decoding process or decoder adopting an IBC mode. It is important to note that the method of the embodiment does not limit a predicted block splitting manner for IBC, may adopt a conventional rectangular and square block splitting manner, and may also adopt Nx1 or 1xN string splitting. A string matching method is a special case when an Nx1 or 1xN string splitting manner is adopted for IBC.

Step S1002 is completely the same as the step S702.

At step S1004, the decoder determines a waiting time length parameter for in-loop filtering of the current reconstructed CU according to range information about a BV.

The decoder records a splitting situation of CUs in each CTU in an execution process of a reconstruction module. The decoder may record the splitting situation of the CUs in the CTUs by a method of directly storing values of split_cu_flag in the CTU and the CUs, wherein the values of the split_cu_flag may be obtained by directly analyzing a block layer bitstream.

The decoder determines a number eM of minimum CUs included between the current CU and a corresponding CU when the current reconstructed CU simultaneously meets the following conditions 1 and 2 according to a decoding sequence by taking a minimum CU as a unit. The decoder determines a number vM of minimum CUs included between the current CU and the corresponding CU when the current reconstructed CU simultaneously meets the following conditions 1 and 3. The conditions include:
condition one: pixels at a right boundary and lower boundary of the reconstructed CU to be judged are not adopted for pixels in a CU after the current reconstructed CU (according to the decoding sequence) as intra prediction references,
condition two: pixels at a lower boundary of an adjacent CU at the right boundary of the reconstructed CU to be judged are not adopted for the pixels in the CU after the current reconstructed CU (according to the decoding sequence) as the intra prediction references, and
condition three: pixels at a right boundary of an adjacent CU at the lower boundary of the reconstructed CU to be judged are not adopted for the pixels in the CU after the current reconstructed CU (according to the decoding sequence) as the intra prediction references.

At step S1006, an in-loop filtering module performs in-loop filtering processing on a CU according to flag information thereof.

Situation one: a value of eM is equal to vM.

Under the situation, the in-loop filtering module performs in-loop filtering processing on the current reconstructed CU after a reconstruction module outputs reconstruction value of pixels covered by eM (or vM) minimum CUs after the current reconstructed CU according to the decoding sequence.

The in-loop filtering module completes DF processing which is not performed in a horizontal direction and/or a vertical direction on the CU, and a DF module flags locations of filtered boundaries of local reconstructed blocks of adjacent decoded blocks of the CU and an attribute of a filtering operation (including filtering in the horizontal direction and filtering in the vertical direction).

The in-loop filtering module performs filtering processing on reconstructed blocks output by the DF module and obtained by filtering processing using an SAO, and writes data output by an SAO module into a DPB.

Situation two: the value of eM is smaller than vM.

Under this situation, the in-loop filtering module performs DF in the vertical direction on the current reconstructed CU after the reconstruction module outputs the reconstruction values of the pixels covered by the eM minimum CUs after the current reconstructed CU according to the decoding sequence, and flags completion of DF in the vertical direction (the adjacent blocks are included). The in-loop filtering module continues performing DF in the horizontal direction on the current reconstructed CU after the reconstruction module outputs reconstruction values of pixels covered by (vM-eM) minimum CUs, and flags completion of DF in the horizontal direction (the adjacent blocks are included).

The in-loop filtering module performs filtering processing on the reconstructed blocks output by the DF module and obtained by filtering processing by using the SAO, and writes the data output by the SAO module into the DPB.

Situation three: the value of eM is larger than vM.

Under this situation, the in-loop filtering module performs DF in the horizontal direction on the current reconstructed CU after the reconstruction module outputs the reconstruction values of the pixels covered by the vM minimum CUs after the current reconstructed CU according to the decoding sequence, and flags completion of DF in the horizontal direction (the adjacent blocks are included). The in-loop filtering module continues performing DF in the vertical direction on the current reconstructed CU after the reconstruction module outputs reconstruction values of pixels covered by (eM-vM) minimum CUs, and flags completion of DF in the vertical direction (the adjacent blocks are included).

The in-loop filtering module performs filtering processing on the reconstructed blocks output by the DF module and obtained by filtering processing using the SA, and writes the data output by the SAO module into the DPB.

### Embodiment five

The present embodiment provides a loop-filtering-based coding method, which is configured for a coding process or coder adopting an IBC mode. The coding process or the coder may generate a bitstream for correct decoding processing of a decoding process or decoder in embodiment 1 to embodiment four.

At step S1102, the coder determines range information about a BV in the IBC mode.

If applicable, the coder determines range information, i.e. the first range, of the BV(s) according to an adopted profile, tier and level.

If applicable, the coder determines range information, i.e. the second range, of the BV(s) according to splitting boundaries of tiles and slices of a picture.

If applicable, the coder determines range information, i.e. the third range, of the BV(s) according to a decode capability obtained by negotiating with a decoder (such as a memory access limit and pipeline design of the decoder).

The coder determines an intersection of the first range, the second range and the third range as a range, i.e. the fourth range, of the BV(s) of the IBC mode adopted in a coding process.

At step S1104, the coder writes the range information about the BV(s) into the bitstream.

If applicable, the coder writes information about the first range into the following data units:
profile, tier and level information in a VPS; and/or
a profile, tier and level in an SPS.

If applicable, the coder writes the range information about the BV(s) into the bitstream, and writes information about the fourth range into at least one of the following units including:
data units except the profile, tier and level information in the VPS;
data units except profile, tier and level information in the SPS;
a PPS;
slice segment header information;
SEI; and
a user-defined data unit.

At step S1006, the coder codes an input video picture, and locally reconstructs coded blocks to obtain local reconstructed blocks.

The coder may ensure that a size of the BV(s) adopted for the IBC mode is within the fourth range in a process of coding the coded blocks by adopting the IBC mode. That is, pixels outside the fourth range are not adopted as prediction references when prediction reference blocks of IBC mode are searched.

At step S1108, the coder determines a waiting time length between a block layer local reconstruction process and an in-loop filtering process according to the range information about the BV.

Two filters are involved in the in-loop filtering process: a DF and an SAO. Since reconstructed values of sampling values of pixels which are not subjected to in-loop filtering processing are required by construction of a prediction reference block in an intra prediction block decoding process, the coder may execute the in-loop filtering process only after all pixels in a block to be processed are not adopted as intra prediction references of a subsequent decoded block.

For the DF, not only are pixels in a current processed block required to be adopted, but also reconstructed pixels of an adjacent block are required. Therefore, the coder may execute DF only after the pixels of both the current block and the adjacent block are not adopted as intra prediction references.

The coder executes the SAO after DF. Meanwhile, the SAO only adopts reconstructed pixels in the current processed block. Therefore, the coder may execute the SAO after DF is executed.

For a conventional intra prediction mode of adopting adjacent pixels as prediction references, the coder determines a required waiting time length after execution of a local block reconstruction module and before execution of an in-loop filtering module according to sizes of related block units. These block units include at least one of: a maximum CU, a minimum CU, a matrix TU and a minimum TU. Here, that the waiting time length is equal to N indicates that: an in-loop filtering operation is executed on a reconstructed block after a delay of N block units.

Specifically, for the conventional intra prediction mode, pixels at a right boundary and lower boundary of the current processed block may be adopted as the intra prediction references of the subsequent coded block according to a coding sequence. Descriptions will be made with adoption of maximum CUs as an example, and situations of adoption of other block units are similar.

The conventional intra prediction mode directly adopts adjacent pixels of a current coded block as reference pixels to construct a predicted block. Locations of the adjacent pixels in the conventional intra prediction mode are preset, and are not indicated by location offset vectors.

The coder determines a range (i.e. the fifth range) of maximum CUs adopting pixels at right boundaries and lower boundaries of maximum CUs which may be adopted as intra prediction references according to a coding sequence of maximum CUs, sizes of the maximum CUs and a maximum number of adjacent reference pixels required to be adopted in an intra prediction process. Meanwhile, the coder determines adjacent maximum CUs adopted for DF of the maximum CUs, determines a range (i.e. the sixth range) of the maximum CUs of which pixels at lower boundaries are adopted as intra prediction references for the left adjacent maximum CUs, and determines a range (i.e. the seventh range) of the maximum CUs of which pixels at right boundaries are adopted as intra prediction references for the lower adjacent block units.

For the IBC mode, the coder determines a location (recorded as a "second CU") of a last maximum CU where an IBC block adopting pixels in the maximum CU (recorded as a "first CU") as references is located according to the range information about the BV(s) and the coding sequence. The first CU, the second CU and a maximum CU between The first CU, the second CU are determined as the eighth range (including the second CU) according to the coding sequence of the maximum CUs.

The coder sets a union of the fifth range, the sixth range, the seventh range and the eighth range as the ninth range, and limits the ninth range within a tile and slice range where the maximum CU is located according to tile partition information about a current picture and a starting location of a slice where the maximum CU is located. The coder determines a number of maximum CUs (not including the maximum CU but including a last maximum CU in the ninth range) included between the maximum CU and the last maximum CU in the ninth range as the waiting time length, recorded as M, between the block layer reconstruction process and the in-loop filtering process.

At step S1110, after obtaining the local reconstructed blocks of the coded blocks, the coder performs DF and SAO on the reconstructed blocks through an in-loop filtering module after the waiting time length.

Adoption of the maximum CUs in step S1108 as a block unit is taken as an example, and situations of adopting other block units are similar.

Preferably, after reconstruction of the current maximum CU (which is flagged as the "first maximum CU)" is completed, the coder sequentially performs DF and SAO processing on reconstructed data of the first maximum CU through the in-loop filtering module after completing reconstruction of M subsequent maximum CUs according to the coding sequence.

Preferably, the block reconstruction module in the coder starts reconstruction from a first maximum CU in a slice or the picture according to the coding sequence, and writes reconstructed data of the maximum CUs into a buffer. When the reconstruction module starts processing an (M+2)th maximum CU in the slice or the picture, the in-loop filtering module starts sequentially performing in-loop filtering processing on the local reconstructed data of each maximum CU from the first maximum CU in the slice or the picture according to the coding sequence, and determines an in-loop filtering parameter.

The in-loop filtering module completes DF processing which is not performed in a horizontal direction and/or a vertical direction on the maximum CUs, and a DF module flags locations of filtered boundaries of reconstructed blocks of adjacent decoded blocks of the first maximum CU and an attribute of a filtering operation (including filtering in the horizontal direction and filtering in the vertical direction).

The in-loop filtering module performs filtering processing on reconstructed blocks output by the DF module and obtained by filtering processing by using the SAO, and writes data output by an SAO module into a local DPB.

### Embodiment six

In embodiment five, a coder selects a certain block unit, and determines a maximum waiting time length in a manner of counting based on the selected block unit. An in-loop filtering module starts performing in-loop filtering processing on a local reconstructed block after the maximum waiting time length. The embodiment provides a coding method capable of dynamically performing block layer in-loop filtering, which is configured for a coding process or coder adopting an IBC mode. It is important to note that the method of the embodiment does not limit a predicted block splitting manner for IBC, may adopt a conventional rectangular and square block splitting manner, and may also adopt Nx1 or 1xN string splitting. A string matching method is a special case when an Nx1 or 1xN string splitting manner is adopted for IBC.

Step S1202 is completely the same as Step S1102.

Step S1204 is completely the same as Step S1104.

Step S1206 is completely the same as Step S1106.

At step S1208, the coder determines indication information about whether in-loop filtering processing may be performed on an existing local reconstructed block or not according to information about the fourth range of the BV(s).

The coder records a splitting situation of CUs in each CTU in a coding process. The coder may record the splitting situation of the CUs in the CTUs by a method of directly storing values of split_cu_flag in the CTU and the CUs.

After completing local reconstruction of a current CU, the coder makes a judgment to a CU which has been reconstructed before the current CU but yet not been subjected to in-loop filtering processing about the following conditions according to a coding sequence:
condition one: pixels at a right boundary and lower boundary of the local reconstructed CU to be judged are not adopted for pixels in a CU after the current local reconstructed CU (according to the coding sequence) as intra prediction references,
condition two: pixels at a lower boundary of an adjacent CU at the right boundary of the local reconstructed CU to be judged are not adopted for the pixels in the CU after the current local reconstructed CU (according to the coding sequence) as the intra prediction references, and
condition three: pixels at a right boundary of an adjacent CU at the lower boundary of the local reconstructed CU to be judged are not adopted for the pixels in the CU after the current local reconstructed CU (according to the coding sequence) as the intra prediction references.

When the above three conditions are simultaneously met, the coder flags the local reconstructed CU to be judged as "loop filtering processing may be performed"; when condition one and condition two are met, the coder flags the local reconstructed CU to be judged as "DF in a horizontal direction may be performed"; and when condition one and condition three are met, the coder flags the local reconstructed CU to be judged as "DF in a vertical direction may be performed". Under other conditions, the coder flags the local reconstructed CU to be judged as "loop filtering processing may not be performed".

At step S1210, the in-loop filtering module performs in-loop filtering processing on a CU according to flag information thereof.

### Situation one:

When the flag information about the local reconstructed CU is "loop filtering processing may be performed", the in-loop filtering module completes DF processing which is not performed in the horizontal direction and/or the vertical direction on the CU, and a DF module flags locations of filtered boundaries of reconstructed blocks of adjacent coded blocks of the CU and an attribute of a filtering operation (including filtering in the horizontal direction and filtering in the vertical direction).

The in-loop filtering module performs filtering processing on reconstructed blocks output by the DF module and obtained by filtering processing using an SAO, and writes data output by an SAO module into a local DPB.

### Situation two:

When the flag information about the local reconstructed CU is "DF in the vertical direction may be performed" or "DF in the horizontal direction may be performed", the DF module in the in-loop filtering module performs DF in the vertical direction or the horizontal direction on pixels to be filtered on which DF is not performed in the vertical direction or the horizontal direction in the CU, and flags locations of their filtered boundaries and an attribute of a filtering operation (including filtering in the horizontal direction and filtering in the vertical direction).

If DF has been performed in the vertical direction and the horizontal direction on the local reconstructed CU, the in-loop filtering module filters the reconstructed CU by using the SAO, and writes the data output by the SAO module into the DPB, otherwise the in-loop filtering module does not filter on the reconstructed CU by using the SAO, temporally stores the local reconstructed CU in the buffer, and waits for a further operation instruction related to DF, the operation instruction related to DF including one of: "loop filtering processing may be performed", "DF in the vertical direction may be performed" and "DF in the horizontal direction may be performed".

### Situation three:

When the flag information about the local reconstructed CU is "loop filtering processing may not be performed", the in-loop filtering module does not perform filtering processing on the local reconstructed CU using the DF and the SAO.

### Embodiment seven

In the method of embodiment six, a coder judges whether in-loop filtering processing may be performed on CUs which have been reconstructed before or not after reconstruction of a current CU, and filters a CU on which all or part of in-loop filtering processing may be performed. The present embodiment provides a coding method of directly setting an in-loop filtering flag for a current reconstructed CU, which is configured for a coding process or coder adopting an IBC mode. It is important to note that the method of the embodiment does not limit a predicted block splitting manner for IBC, may adopt a conventional rectangular and square block splitting manner, and may also adopt Nx1 or 1xN string splitting. A string matching method is a special case when an Nx1 or 1xN string splitting manner is adopted for IBC.

Step S1302 is completely the same as the step S1102.

Step S1304 is completely the same as the step S1104.

Step S1306 is completely the same as the step S1106.

At step S1308, the coder determines a waiting time length parameter for in-loop filtering of the current local reconstructed CU according to information about the fourth range of a BV.

The coder records a splitting situation of CUs in each CTU in a coding process. The coder may record the splitting situation of the CUs in the CTUs by a method of directly storing values of split_cu_flag in the CTU and the CUs.

The coder determines a number M of minimum CUs included between the current CU and a corresponding CU when the current local reconstructed CU simultaneously meets the following conditions according to a coding sequence by taking a minimum CU as a unit. The conditions include:
condition one: pixels at a right boundary and lower boundary of the local reconstructed CU to be judged are not adopted for pixels in a CU after the current local reconstructed CU (according to the coding sequence) as intra prediction references,
condition two: pixels at a lower boundary of an adjacent CU at the right boundary of the local reconstructed CU to be judged are not adopted for the pixels in the CU after the current local reconstructed CU (according to the coding sequence) as the intra prediction references, and
condition three: pixels at a right boundary of an adjacent CU at the lower boundary of the local reconstructed CU to be judged are not adopted for the pixels in the CU after the current local reconstructed CU (according to the coding sequence) as the intra prediction references.

At step S1310, an in-loop filtering module performs in-loop filtering processing on the current local reconstructed CU after a local reconstruction module outputs reconstruction value of pixels covered by M minimum CUs after the current local reconstructed CU according to the coding sequence.

The in-loop filtering module completes DF processing which is not performed in a horizontal direction and/or a vertical direction on the CU, and a DF module of the coder flags locations of filtered boundaries of local reconstructed blocks of adjacent coded blocks of the CU and an attribute of a filtering operation (including filtering in the horizontal direction and filtering in the vertical direction).

The in-loop filtering module performs filtering processing on local reconstructed blocks output from the DF module and obtained through filtering processing by using an SAO, and writes data output from an SAO module into a local DPB.

On the basis of embodiment seven, a more flexible waiting time length is adopted to make fuller use of processing resources of a coder. The present embodiment provides a coding method of directly setting an in-loop filtering flag for a current reconstructed CU, which is configured for a coding process or coder adopting an IBC mode. It is important to note that the method of the embodiment does not limit a predicted block splitting manner for IBC, may adopt a conventional rectangular and square block splitting manner, and may also adopt Nx1 or 1xN string splitting. A string matching method is a special case when an Nx1 or 1xN string splitting manner is adopted for IBC.

Step S1402 is completely the same as Step S1102.

Step S1404 is completely the same as Step S1104.

Step S1406 is completely the same as Step S1106.

At step S1408, the coder determines a waiting time length parameter for in-loop filtering of the current local reconstructed CU according to information about the fourth range of a BV.

The coder records a splitting situation of CUs in each CTU in a coding process. The coder may record the splitting situation of the CUs in the CTUs by a method of directly storing values of split_cu_flag in the CTU and the CUs.

The coder determines a number eM of minimum CUs included between the current CU and a corresponding CU when the current local reconstructed CU simultaneously meets the following conditions one and two according to a coding sequence by taking a minimum CU as a unit. The coder determines a number vM of minimum CUs included between the current CU and the corresponding CU when the current local reconstructed CU simultaneously meets the following conditions one and three. The conditions include:
condition one: pixels at a right boundary and lower boundary of the local reconstructed CU to be judged are not adopted for pixels in a CU after the current local reconstructed CU (according to the coding sequence) as intra prediction references,
condition two: pixels at a lower boundary of an adjacent CU at the right boundary of the local reconstructed CU to be judged are not adopted for the pixels in the CU after the current local reconstructed CU (according to the coding sequence) as the intra prediction references, and
condition three: pixels at a right boundary of an adjacent CU at the lower boundary of the local reconstructed CU to be judged are not adopted for the pixels in the CU after the current local reconstructed CU (according to the coding sequence) as the intra prediction references.

At step S1410: an in-loop filtering module performs in-loop filtering processing on a CU according to flag information thereof.

Situation one: a value of eM is equal to vM.

Under this situation, the in-loop filtering module performs in-loop filtering processing on the current local reconstructed CU after a local reconstruction module outputs local reconstruction values of pixels covered by eM (or vM) minimum CUs after the current local reconstructed CU according to the coding sequence.

The in-loop filtering module completes DF processing which is not performed in a horizontal direction and/or a vertical direction on the CU, and a DF module flags locations of filtered boundaries of local reconstructed blocks of adjacent coded blocks of the CU and an attribute of a filtering operation (including filtering in the horizontal direction and filtering in the vertical direction).

The in-loop filtering module performs filtering processing on local reconstructed blocks output by the DF module and obtained by filtering processing using an SAO, and writes data output by an SAO module into a local DPB.

Situation two: the value of eM is smaller than vM.

Under this situation, the in-loop filtering module performs DF in the vertical direction on the current local reconstructed CU after the local reconstruction module outputs the local reconstruction values of the pixels covered by the eM minimum CUs after the current local reconstructed CU according to the coding sequence, and flags completion of DF in the vertical direction (the adjacent blocks are included). The in-loop filtering module continues performing DF in the horizontal direction on the current reconstructed CU after the local reconstruction module outputs reconstruction values of pixels covered by (vM-eM) minimum CUs, and flags completion of DF in the horizontal direction (the adjacent blocks are included).

The in-loop filtering module performs filtering processing on the local reconstructed blocks output by the DF module and obtained by filtering processing by using the SAO, and writes the data output by the SAO module into the local DPB.

Situation three: the value of eM is larger than vM.

Under this situation, the in-loop filtering module performs DF in the horizontal direction on the current local reconstructed CU after the local reconstruction module outputs the local reconstruction values of the pixels covered by the vM minimum CUs after the current local reconstructed CU according to the coding sequence, and flags completion of DF in the horizontal direction (the adjacent blocks are included). The in-loop filtering module continues performing DF in the vertical direction on the current reconstructed CU after the local reconstruction module outputs local reconstruction values of pixels covered by (eM-vM) minimum CUs, and flags completion of DF in the vertical direction (the adjacent blocks are included).

The in-loop filtering module performs filtering processing on the local reconstructed blocks output by the DF module and obtained by filtering processing using the SA, and writes the data output by the SAO module into the local DPB.

### Embodiment nine

The present embodiment provides electronic equipment, which includes a coder and/or a decoder.

The coder generates a video bitstream using any implementation method for the coder according to embodiment five to embodiment eight.

The decoder decodes the video bitstream using any implementation method for the decoder according to embodiment one to embodiment four.

The electronic equipment of the embodiment may be related bitstream generation equipment and receiving and playing equipment for a video communication application, such as a mobile phone, a computer, a server, a set-top box, a portable mobile terminal, a digital camera and television broadcasting system equipment.

In another embodiment, software is further provided, which is configured to execute the technical solutions described in the abovementioned embodiments and exemplary embodiments.

In another embodiment, a storage medium is further provided, in which the abovementioned software is stored, the storage medium including, but not limited to, an optical disk, a floppy disk, a hard disk, an erasable memory and the like.

Obviously, those skilled in the art should know that each module or each step of the present disclosure may be implemented by a universal computing device, and the modules or steps may be concentrated on a single computing device or distributed on a network formed by a plurality of computing devices, and may optionally be implemented by program codes executable for the computing devices, so that the modules or steps may be stored in a storage device for execution with the computing devices, the shown or described steps may be executed in sequences different from those described here in some circumstances, or may form each integrated circuit module respectively, or multiple modules or steps therein may form a single integrated circuit module for implementation. As a consequence, the present disclosure is not limited to any specific hardware and software combination.

The above is only the exemplary embodiment of the present disclosure and not intended to limit the present disclosure. For those skilled in the art, the present disclosure may have various modifications and variations. The scope of the invention is defined by the appended claims.

### Industrial Applicability

As mentioned above, the coding method, decoding method, devices and electronic equipment provided by the embodiments of the present disclosure have the following beneficial effects: a manner of determining the restricting range information about the BV(s) of the IBC mode and writing the restricting range information into the bitstream is adopted, so that the problem of reduction in data processing efficiency caused by the fact that a BV range may not be determined after introduction of IBC in the related technology is solved, the data processing efficiency may be improved, and meanwhile, smooth implementation of a coding or decoding process may also be ensured.

## Claims

1. A coding method, comprising:
determining restricting range information about Block copying Vector(s) (BV(s)) of an Intra Block Copying IBC mode (S102);
writing the restricting range information into a bitstream (S104); and
before or after writing the restricting range information into the bitstream, using an in-loop filtering pipeline for performing in-loop filtering on a reconstructed block according to the restricting range information;
**characterized in that**
said determining the restricting range information about the BV(s) of the IBC mode comprises: determining a first restricting range of the BV(s) according to an adopted profile, tier and level; determining a second restricting range of the BV(s) according to boundaries of tiles and slices of a picture; determining a third restricting range of the BV(s) according to a decode capability obtained by negotiating with a decoder; and determining an intersection of the first restricting range, the second restricting range and the third restricting range as a fourth restricting range of the BV(s) of the IBC mode adopted in a coding process;
said writing the restricting range information into the bitstream comprises: writing information about the fourth restricting range of the BV(s) into at least one of the following data units: data units except the profile, tier and level information in the VPS, data units except profile, tier and level information in the SPS, a Picture Parameter Set (PPS), slice segment header information, Supplemental Enhancement Information (SEI) and a user-defined data unit.

2. The method according to claim 1, wherein performing in-loop filtering on the reconstructed block according to the restricting range information comprises:
determining a waiting time length between a block layer reconstruction process and an in-loop filtering process according to the restricting range information;
starting executing the in-loop filtering process the waiting time length after starting executing the block layer reconstruction process.

3. The method according to claim 2, wherein
determining a last block unit where an IBC block adopting pixels in a current first block unit as references is located as a second block unit according to the restricting range information;
determining the first block unit, the second block unit, and block units between the first block unit and the second block unit as an eighth range according to a coding sequence;
determining a union of the eighth range and a block unit range adopted for a conventional intra prediction mode as a ninth range; and
determining a number of block units comprised between the first block unit and a last block unit of the ninth range as the waiting time length;
the conventional intra prediction mode directly adopts adjacent pixels of a current coded block as reference pixels to construct a predicted block, wherein locations of the adjacent pixels in the conventional intra prediction mode are preset, and are not indicated by location offset vectors;
limiting the ninth range within a tile and/or slice range where the first block unit is located according to tile partition information about the current picture and/or a starting location of a slice where the first block unit is located;
wherein the block unit range adopted for the conventional intra prediction mode comprises at least one of the following ranges or a union of at least two of the following ranges:
a range of block units adopting pixels at right boundaries and lower boundaries of block units which may be adopted as intra prediction references is determined as a fifth range according to the coding sequence of block units, sizes of the block units and a maximum number of adjacent reference pixels required to be adopted in an intra prediction process; and
adjacent block units adopted for Deblocking Filtering (DF) of the block units are determined, a range of the block units of which pixels at lower boundaries are adopted as intra prediction references is determined as a sixth range for the right adjacent block units, and a range of the block units of which pixels at right boundaries are adopted as intra prediction references is determined as a seventh range for the lower adjacent block units.

4. The method according to claim 1, wherein performing block layer in-loop filtering on the reconstructed block according to the restricting range information comprises:
determining a waiting time length for in-loop filtering of the current local constructed block unit according to the restricting range information.

5. A decoding method, comprising:
acquiring restricting range information about Block copying Vector(s) (BV(s)) of an Intra Block Copying IBC mode from a bitstream (S302); and
determining a restricting range of the BV(s) of the IBC mode according to the restricting range information (S304);
after determining said restricting, using an in-loop filtering pipeline for performing in-loop filtering on a reconstructed block according to the restricting range;
**characterized in that**,
said acquiring the restricting range information about the BV(s) of the IBC mode from the bitstream comprises: acquiring the range information from at least one of the following data units: data units except the profile, tier and level information in the VPS, data units except profile, tier and level information in the SPS, a picture Parameter Set (PPS), slice segment header information, Supplemental Enhancement Information (SEI) and a user-defined data unit;
wherein the restricting range represents an intersection of a first restricting range, a second restricting range and a third restricting range, the first restricting range having been set according to an adopted profile, tier and level, the second restricting range having been set according to boundaries of tiles and slices of a picture, the third restricting range having been set according to a decode capability obtained by negotiating with a decoder.

6. The method according to claim 5, wherein performing in-loop filtering on the reconstructed block according to the restricting range information comprises:
determining a waiting time length between a block layer reconstruction process and an in-loop filtering process according to the restricting range information;
starting executing the in-loop filtering process the waiting time length after starting executing the block layer reconstruction process.

7. The method according to claim 6, wherein
a last block unit where an IBC block adopting pixels in a current first block unit as references is located is determined as a second block unit according to the restricting range information;
determining the first block unit, the second block unit, and block units between the first block unit and the second block unit as a fourth range according to a decoding sequence;
a union of the fourth range and a block unit range adopted for a conventional intra prediction mode is determined as a fifth range; and
a number of block units comprised between the first block unit and a last block unit of the fifth range is determined as the waiting time length;
the conventional intra prediction mode directly adopts adjacent pixels of a current coded block as reference pixels to construct a predicted block, wherein locations of the adjacent pixels in the conventional intra prediction mode are preset, and are not indicated by location offset vectors;
limiting the fifth range within a tile and/or slice range where the first block unit is located according to tile partition information about a current picture and/or a starting location of a slice where the first block unit is located;
wherein the block unit range adopted for the conventional intra prediction mode comprises at least one of the following ranges or a union of at least two of the following ranges:
a range of block units adopting pixels at right boundaries and lower boundaries of block units which may be adopted as intra prediction references is determined as a fifth range according to the decoding sequence of block units, sizes of the block units and a maximum number of adjacent reference pixels required to be adopted in an intra prediction process; and
adjacent block units adopted for DF of the block units are determined, a range of the block units of which pixels at lower boundaries are adopted as intra prediction references is determined as a sixth range for the right adjacent block units, and a range of the block units of which pixels at right boundaries are adopted as intra prediction references is determined as a seventh range for the lower adjacent block units.

8. A coding device, comprising:
a first determination module, configured to determine restricting range information about Block copying Vector(s) (BV(s)) of an Intra Block Copying (IBC) mode;
a writing module, configured to write the restricting range information into a bitstream; and
a first in-loop filtering module, including an in-loop filtering pipeline configured to perform in-loop filtering on a reconstructed block according to the restricting range information;
**characterized in that**
the first determination module is configured to determine the restricting range information about the BV(s) of the IBC mode by: determining a first restricting range of the BV(s) according to an adopted profile, tier and level; determining a second restricting range of the BV(s) according to boundaries of tiles and slices of a picture; determining a third restricting range of the BV(s) according to a decode capability obtained by negotiating with a decoder; and determining an intersection of the first restricting range, the second restricting range and the third restricting range as a fourth restricting range of the BV(s) of the IBC mode adopted in a coding process;
the writing module is configured to write the restricting range information into the bitstream by: write information about the fourth restricting range of the BV(s) into at least one of the following data units: data units except the profile, tier and level information in the VPS, data units except profile, tier and level information in the SPS, a Picture Parameter Set (PPS), slice segment header information, Supplemental Enhancement Information (SEI) and a user-defined data unit.

9. A decoding device, comprising:
an acquisition module, configured to acquire restricting range information about Block copying Vector(s) (BV(s)) of an Intra Block Copying (IBC) mode from a bitstream;
a second determination module, configured to determine a restricting range of the BV(s) of the IBC mode according to the restricting range information; and
a second in-loop filtering module, including an in-loop filtering pipeline configured to perform in-loop filtering according to a reconstructed block according to the restricting range information; **characterized in that**
acquiring the restricting range information about the BV(s) of the IBC mode from the bitstream comprises: acquiring the range information from at least one of the following data units: data units except the profile, tier and level information in the VPS, data units except profile, tier and level information in the SPS, a picture Parameter Set (PPS), slice segment header information, Supplemental Enhancement Information (SEI) and a user-defined data unit;
and **in that** the restricting range represents an intersection of a first restricting range, a second restricting range and a third restricting range, the first restricting range having been set according to an adopted profile, tier and level, the second restricting range having been set according to boundaries of tiles and slices of a picture, the third restricting range having been set according to a decode capability obtained by negotiating with a decoder.

## Patentansprüche

1. Codierverfahren, umfassend:
Bestimmen von Restriktionsbereichsinformationen über Blockkopiervektor(en) (BV) eines Intra-Blockkopier-, IBC, Modus (S102);
Schreiben der Restriktionsbereichsinformationen in einen Bitstrom (S104); und
vor oder nach dem Schreiben der Restriktionsbereichsinformationen in den Bitstrom, Verwenden einer In-Loop-Filterpipeline zum Durchführen von In-Loop-Filterung an einem rekonstruierten Block gemäß den Restriktionsbereichsinformationen;
**dadurch gekennzeichnet, dass**
das Bestimmen der Restriktionsbereichsinformationen über den/die BV des IBC-Modus umfasst: Bestimmen eines ersten Restriktionsbereichs des/der BV gemäß einem Profil, einer Ebene und einem Level, die angenommen werden; Bestimmen eines zweiten Restriktionsbereichs des/der BV gemäß Grenzen von Kacheln und Schnitten eines Bildes; Bestimmen eines dritten Restriktionsbereichs des/der BV gemäß einer Decodierfähigkeit, die durch Aushandeln mit einem Decodierer erhalten wird; und Bestimmen einer Schnittmenge des ersten Restriktionsbereichs, des zweiten Restriktionsbereichs und des dritten Restriktionsbereichs als einen vierten Restriktionsbereich des/der BV des IBC-Modus, der in einem Codiervorgang angenommen wird;
wobei das Schreiben der Restriktionsbereichsinformationen in den Bitstrom umfasst: Schreiben von Informationen über den vierten Restriktionsbereich des/der BV in mindestens eine der folgenden Dateneinheiten: Dateneinheiten mit Ausnahme der Profil-, Ebenen- und Level-Informationen im VPS, Dateneinheiten mit Ausnahme von Profil-, Ebenen- und Level-Informationen im SPS, einen Bildparametersatz (PPS), Schnittsegmentheader-Informationen, zusätzliche Erweiterungsinformationen (SEI) und eine benutzerdefinierte Dateneinheit.

2. Verfahren nach Anspruch 1, wobei das Durchführen von In-Loop-Filterung am rekonstruierten Block gemäß den Restriktionsbereichsinformationen umfasst:
Bestimmen einer Wartezeitlänge zwischen einem Blockschichtrekonstruktionsvorgang und einem In-Loop-Filtervorgang gemäß den Restriktionsbereichsinformationen;
Starten der Ausführung des In-Loop-Filtervorgangs die Wartezeitlänge nach dem Starten der Ausführung des Blockschichtrekonstruktionsvorgangs.

3. Verfahren nach Anspruch 2, wobei
Bestimmen einer letzten Blockeinheit, bei der sich ein IBC-Block, der Pixel in einer aktuellen ersten Blockeinheit als Referenzen annimmt, befindet, als eine zweite Blockeinheit gemäß den Restriktionsbereichsinformationen;
Bestimmen der ersten Blockeinheit, der zweiten Blockeinheit, und von Blockeinheiten zwischen der ersten Blockeinheit und der zweiten Blockeinheit als einen achten Bereich gemäß einer Codiersequenz;
Bestimmen einer Vereinigung des achten Bereichs und eines Blockeinheitenbereichs, der für einen konventionellen Intra-Prädiktionsmodus angenommen wird, als einen neunten Bereich; und
Bestimmen einer Anzahl von Blockeinheiten, die zwischen der ersten Blockeinheit und einer letzten Blockeinheit des neunten Bereichs umfasst sind, als die Wartezeitlänge;
der konventionelle Intra-Prädiktionsmodus benachbarte Pixel eines aktuell codierten Blocks direkt als Referenzpixel annimmt, um einen prädizierten Block zu konstruieren, wobei Positionen der benachbarten Pixel im konventionellen Intra-Prädiktionsmodus voreingestellt sind und nicht durch Positionsversatzvektoren angegeben werden;
Begrenzen des neunten Bereichs innerhalb eines Kachel- und/oder Schnittbereichs, in dem sich die erste Blockeinheit befindet, gemäß Kachelpartitionsinformationen über das aktuelle Bild und/oder einer Startposition eines Schnitts, in dem sich die erste Blockeinheit befindet;
wobei der Blockeinheitenbereich, der für den konventionellen Intra-Prädiktionsmodus angenommen wird, mindestens einen der folgenden Bereiche oder eine Vereinigung von mindestens zwei der folgenden Bereiche umfasst:
ein Bereich von Blockeinheiten, die Pixel an rechten Grenzen und unteren Grenzen von Blockeinheiten annehmen, die als Intra-Prädiktionsreferenzen angenommen werden können, wird als ein fünfter Bereich gemäß der Codiersequenz von Blockeinheiten, Größen der Blockeinheiten und einer maximalen Anzahl benachbarter Referenzpixel, die in einem Intra-Prädiktionsvorgang angenommen werden müssen, bestimmt; und
benachbarte Blockeinheiten, die für Deblockierfilterung (DF) der Blockeinheiten angenommen werden, werden bestimmt, ein Bereich der Blockeinheiten, von denen Pixel an unteren Grenzen als Intra-Prädiktionsreferenzen angenommen werden, wird als ein sechster Bereich für die rechten benachbarten Blockeinheiten bestimmt, und ein Bereich der Blockeinheiten, von denen Pixel an rechten Grenzen als Intra-Prädiktionsreferenzen angenommen werden, wird als ein siebter Bereich für die unteren benachbarten Blockeinheiten bestimmt.

4. Verfahren nach Anspruch 1, wobei das Durchführen von Blockschicht-In-Loop-Filterung am rekonstruierten Block gemäß den Restriktionsbereichsinformationen umfasst:
Bestimmen einer Wartezeitlänge für In-Loop-Filterung der aktuell lokal konstruierten Blockeinheit gemäß den Restriktionsbereichsinformationen.

5. Decodierverfahren, umfassend:
Erfassen von Restriktionsbereichsinformationen über Blockkopiervektor(en) (BV) eines Intra-Blockkopier-, IBC, Modus aus einem Bitstrom (S302); und
Bestimmen eines Restriktionsbereichs des/der BV des IBC-Modus gemäß den Restriktionsbereichsinformationen (S304) ;
nach dem Bestimmen der Restriktion, Verwenden einer In-Loop-Filterpipeline zum Durchführen von In-Loop-Filterung an einem rekonstruierten Block gemäß dem Restriktionsbereich;
**dadurch gekennzeichnet, dass**
das Erfassen der Restriktionsbereichsinformationen über den/die BV des IBC-Modus aus dem Bitstrom umfasst: Erfassen der Bereichsinformationen aus mindestens einer der folgenden Dateneinheiten: Dateneinheiten mit Ausnahme der Profil-, Ebenen- und Level-Informationen im VPS, Dateneinheiten mit Ausnahme von Profil-, Ebenen- und Level-Informationen im SPS, einem Bildparametersatz (PPS), Schnittsegmentheader-Informationen, zusätzlichen Erweiterungsinformationen (SEI) und einer benutzerdefinierten Dateneinheit;
wobei der Restriktionsbereich eine Schnittmenge eines ersten Restriktionsbereichs, eines zweiten Restriktionsbereichs und eines dritten Restriktionsbereichs darstellt, wobei der erste Restriktionsbereich gemäß einem Profil, einer Ebene und einem Level, die angenommen wurden, eingestellt wurde, wobei der zweite Restriktionsbereich gemäß Grenzen von Kacheln und Schnitten eines Bildes eingestellt wurde, wobei der dritte Restriktionsbereich gemäß einer Decodierfähigkeit eingestellt wurde, die durch Aushandeln mit einem Decodierer erhalten wurde.

6. Verfahren nach Anspruch 5, wobei das Durchführen von In-Loop-Filterung am rekonstruierten Block gemäß den Restriktionsbereichsinformationen umfasst:
Bestimmen einer Wartezeitlänge zwischen einem Blockschichtrekonstruktionsvorgang und einem In-Loop-Filtervorgang gemäß den Restriktionsbereichsinformationen;
Starten der Ausführung des In-Loop-Filtervorgangs die Wartezeitlänge nach dem Starten der Ausführung des Blockschichtrekonstruktionsvorgangs.

7. Verfahren nach Anspruch 6, wobei
eine letzte Blockeinheit, bei der sich ein IBC-Block, der Pixel in einer aktuellen ersten Blockeinheit als Referenzen annimmt, befindet, als eine zweite Blockeinheit gemäß den Restriktionsbereichsinformationen bestimmt wird;
Bestimmen der ersten Blockeinheit, der zweiten Blockeinheit und von Blockeinheiten zwischen der ersten Blockeinheit und der zweiten Blockeinheit als einen vierten Bereich gemäß einer Decodiersequenz;
eine Vereinigung des vierten Bereichs und eines Blockeinheitenbereichs, der für einen konventionellen Intra-Prädiktionsmodus angenommen wird, als ein fünfter Bereich bestimmt wird; und
eine Anzahl von Blockeinheiten, die zwischen der ersten Blockeinheit und einer letzten Blockeinheit des fünften Bereichs umfasst sind, als die Wartezeitlänge bestimmt wird;
der konventionelle Intra-Prädiktionsmodus benachbarte Pixel eines aktuell codierten Blocks direkt als Referenzpixel annimmt, um einen prädizierten Block zu konstruieren, wobei Positionen der benachbarten Pixel im konventionellen Intra-Prädiktionsmodus voreingestellt sind und nicht durch Positionsversatzvektoren angegeben werden;
Begrenzen des fünften Bereichs innerhalb eines Kachel- und/oder Schnittbereichs, in dem sich die erste Blockeinheit befindet, gemäß Kachelpartitionsinformationen über ein aktuelles Bild und/oder einer Startposition eines Schnitts, in dem sich die erste Blockeinheit befindet;
wobei der Blockeinheitenbereich, der für den konventionellen Intra-Prädiktionsmodus angenommen wird, mindestens einen der folgenden Bereiche oder eine Vereinigung von mindestens zwei der folgenden Bereiche umfasst:
ein Bereich von Blockeinheiten, die Pixel an rechten Grenzen und unteren Grenzen von Blockeinheiten annehmen, die als Intra-Prädiktionsreferenzen angenommen werden können, wird als ein fünfter Bereich gemäß der Decodiersequenz von Blockeinheiten, Größen der Blockeinheiten und einer maximalen Anzahl benachbarter Referenzpixel, die in einem Intra-Prädiktionsvorgang angenommen werden müssen, bestimmt; und
benachbarte Blockeinheiten, die für DF der Blockeinheiten angenommen werden, werden bestimmt, ein Bereich der Blockeinheiten, von denen Pixel an unteren Grenzen als Intra-Prädiktionsreferenzen angenommen werden, wird als ein sechster Bereich für die rechten benachbarten Blockeinheiten bestimmt, und ein Bereich der Blockeinheiten, von denen Pixel an rechten Grenzen als Intra-Prädiktionsreferenzen angenommen werden, wird als ein siebter Bereich für die unteren benachbarten Blockeinheiten bestimmt.

8. Codiervorrichtung, umfassend:
ein erstes Bestimmungsmodul, das dazu konfiguriert ist, Restriktionsbereichsinformationen über Blockkopiervektor(en) (BV) eines Intra-Blockkopier- (IBC) Modus zu bestimmen;
ein Schreibmodul, das dazu konfiguriert ist, die Restriktionsbereichsinformationen in einen Bitstrom zu schreiben; und
ein erstes In-Loop-Filtermodul, das eine In-Loop-Filterpipeline einschließt, die dazu konfiguriert ist, In-Loop-Filterung an einem rekonstruierten Block gemäß den Restriktionsbereichsinformationen durchzuführen;
**dadurch gekennzeichnet, dass**
das erste Bestimmungsmodul dazu konfiguriert ist, die Restriktionsbereichsinformationen über den/die BV des IBC-Modus zu bestimmen durch:
Bestimmen eines ersten Restriktionsbereichs des/der BV gemäß einem Profil, einer Ebene und einem Level, die angenommen werden;
Bestimmen eines zweiten Restriktionsbereichs des/der BV gemäß Grenzen von Kacheln und Schnitten eines Bildes;
Bestimmen eines dritten Restriktionsbereichs des/der BV gemäß einer Decodierfähigkeit, die durch Aushandeln mit einem Decodierer erhalten wird; und
Bestimmen einer Schnittmenge des ersten Restriktionsbereichs, des zweiten Restriktionsbereichs und des dritten Restriktionsbereichs als einen vierten Restriktionsbereich des/der BV des IBC-Modus, der in einem Codiervorgang angenommen wird;
das Schreibmodul dazu konfiguriert ist, die Restriktionsbereichsinformationen in den Bitstrom zu schreiben durch: Schreiben von Informationen über den vierten Restriktionsbereich des/der BV in mindestens eine der folgenden Dateneinheiten: Dateneinheiten mit Ausnahme der Profil-, Ebenen- und Level-Informationen im VPS, Dateneinheiten mit Ausnahme von Profil-, Ebenen- und Level-Informationen im SPS, einen Bildparametersatz (PPS), Schnittsegmentheader-Informationen, zusätzliche Erweiterungsinformationen (SEI) und eine benutzerdefinierte Dateneinheit.

9. Decodiervorrichtung, umfassend:
ein Erfassungsmodul, das dazu konfiguriert ist, Restriktionsbereichsinformationen über Blockkopiervektor(en) (BV) eines Intra-Blockkopier- (IBC) Modus aus einem Bitstrom zu erfassen;
ein zweites Bestimmungsmodul, das dazu konfiguriert ist, einen Restriktionsbereich des/der BV des IBC-Modus gemäß den Restriktionsbereichsinformationen zu bestimmen; und
ein zweites In-Loop-Filtermodul, das eine In-Loop-Filterpipeline einschließt, die dazu konfiguriert ist, In-Loop-Filterung gemäß einem rekonstruierten Block gemäß den Restriktionsbereichsinformationen durchzuführen;
**dadurch gekennzeichnet, dass**
das Erfassen der Restriktionsbereichsinformationen über den/die BV des IBC-Modus aus dem Bitstrom umfasst: Erfassen der Bereichsinformationen aus mindestens einer der folgenden Dateneinheiten: Dateneinheiten mit Ausnahme der Profil-, Ebenen- und Level-Informationen im VPS, Dateneinheiten mit Ausnahme von Profil-, Ebenen- und Level-Informationen im SPS, einem Bildparametersatz (PPS), Schnittsegmentheader-Informationen, zusätzlichen Erweiterungsinformationen (SEI) und einer benutzerdefinierten Dateneinheit;
und dadurch, dass der Restriktionsbereich eine Schnittmenge eines ersten Restriktionsbereichs, eines zweiten Restriktionsbereichs und eines dritten Restriktionsbereichs darstellt, wobei der erste Restriktionsbereich gemäß einem Profil, einer Ebene und einem Level, die angenommen wurden, eingestellt wurde, wobei der zweite Restriktionsbereich gemäß Grenzen von Kacheln und Schnitten eines Bildes eingestellt wurde, wobei der dritte Restriktionsbereich gemäß einer Decodierfähigkeit eingestellt wurde, die durch Aushandeln mit einem Decodierer erhalten wurde.

## Revendications

1. Procédé de codage, comprenant :
la détermination d'informations de plage de restriction concernant un ou des vecteur(s) de copie de bloc (BV) d'un mode de copie d'intra-bloc, IBC, (S102) ;
l'écriture des informations de plage de restriction dans un flux de bits (S104) ; et
avant ou après l'écriture des informations de plage de restriction dans le flux de bits, l'utilisation d'un pipeline de filtrage en boucle pour réaliser un filtrage en boucle sur un bloc reconstruit selon les informations de plage de restriction ;
**caractérisé en ce que**
ladite détermination des informations de plage de restriction concernant le ou les BV du mode IBC comprend : la détermination d'une première plage de restriction du ou des BV selon un profil, rang et niveau adopté ; la détermination d'une deuxième plage de restriction du ou des BV selon des frontières de carreaux et de tranches d'une image ; la détermination d'une troisième plage de restriction du ou des BV selon une capacité de décodage obtenue par négociation avec un décodeur ; et la détermination d'une intersection de la première plage de restriction, de la deuxième plage de restriction et de la troisième plage de restriction en tant que quatrième plage de restriction du ou des BV du mode IBC adopté dans un processus de codage ;
ladite écriture des informations de plage de restriction dans le flux de bits comprend : l'écriture d'informations concernant la quatrième plage de restriction du ou des BV dans au moins une des unités de données suivantes : des unités de données à l'exception des informations de profil, rang et niveau dans le VPS, des unités de données à l'exception d'informations de profil, rang et niveau dans le SPS, un ensemble de paramètres d'image (PPS), des informations d'en-tête de segment de tranche, des informations d'amélioration supplémentaires (SEI) et une unité de données définie par l'utilisateur.

2. Procédé selon la revendication 1, dans lequel la réalisation d'un filtrage en boucle sur le bloc reconstruit selon les informations de plage de restriction comprend :
la détermination d'une longueur de temps d'attente entre un processus de reconstruction de couche de bloc et un processus de filtrage en boucle selon les informations de plage de restriction ;
le démarrage de l'exécution du processus de filtrage en boucle à la longueur de temps d'attente après le démarrage de l'exécution du processus de reconstruction de couche de bloc.

3. Procédé selon la revendication 2, dans lequel
la détermination d'une dernière unité de bloc, où un bloc IBC adoptant des pixels dans une première unité de bloc actuelle en tant que références est situé, en tant que deuxième unité de bloc selon les informations de plage de restriction ;
la détermination de la première unité de bloc, de la deuxième unité de bloc et d'unités de bloc entre la première unité de bloc et la deuxième unité de bloc en tant que huitième plage selon une séquence de codage ;
la détermination d'une union de la huitième plage et d'une plage d'unités de bloc adoptée pour un mode d'intra-prédiction conventionnel en tant que neuvième plage ; et
la détermination d'un nombre d'unités de bloc comprises entre la première unité de bloc et une dernière unité de bloc de la neuvième plage en tant que longueur de temps d'attente ;
le mode d'intra-prédiction conventionnel adopte directement des pixels adjacents d'un bloc codé actuel en tant que pixels de référence pour construire un bloc prédit, dans lequel des emplacements des pixels adjacents dans le mode d'intra-prédiction conventionnel sont prédéfinis et ne sont pas indiqués par des vecteurs de décalage d'emplacement ;
la limitation de la neuvième plage à l'intérieur d'une plage de carreaux et/ou de tranches où la première unité de bloc est située selon des informations de partition de carreau concernant l'image actuelle et/ou un emplacement de début d'une tranche où la première unité de bloc est située ;
dans lequel la plage d'unités de bloc adoptée pour le mode d'intra-prédiction conventionnel comprend au moins une des plages suivantes ou une union d'au moins deux plages suivantes :
une plage d'unités de bloc, adoptant des pixels à des frontières droites et à des frontières inférieures d'unités de bloc qui peuvent être adoptées en tant que références d'intra-prédiction, est déterminée en tant que cinquième plage selon la séquence de codage d'unités de bloc, des tailles des unités de bloc et un nombre maximal de pixels de référence adjacents devant être adoptés dans un processus d'intra-prédiction ; et
des unités de bloc adjacentes, adoptées pour un filtrage de dégroupage (DF) des unités de bloc, sont déterminées, une plage des unités de bloc, dont des pixels à des frontières inférieures sont adoptés en tant que références d'intra-prédiction, est déterminée en tant que sixième plage pour les unités de bloc adjacentes droites, et une plage des unités de bloc, dont des pixels à des frontières droites sont adoptés en tant que références d'intra-prédiction, est déterminée en tant que septième plage pour les unités de bloc adjacentes inférieures.

4. Procédé selon la revendication 1, dans lequel la réalisation d'un filtrage en boucle de couche de bloc sur le bloc reconstruit selon les informations de plage de restriction comprend :
la détermination d'une longueur de temps d'attente pour un filtrage en boucle de l'unité de bloc construite locale actuelle selon les informations de plage de restriction.

5. Procédé de décodage, comprenant :
l'acquisition d'informations de plage de restriction concernant un ou des vecteur(s) de copie de bloc (BV) d'un mode de copie d'intra-bloc, IBC, à partir d'un flux de bits (S302) ; et
la détermination d'une plage de restriction du ou des BV du mode IBC selon les informations de plage de restriction (S304) ;
après la détermination de ladite restriction, l'utilisation d'un pipeline de filtrage en boucle pour réaliser un filtrage en boucle sur un bloc reconstruit selon la plage de restriction ;
**caractérisé en ce que**
ladite acquisition des informations de plage de restriction concernant le ou les BV du mode IBC à partir des flux de bits comprend : l'acquisition des informations de plage à partir d'au moins une des unités de données suivantes : des unités de données à l'exception d'informations de profil, rang et niveau dans le VPS, des unités de données à l'exception d'informations de profil, rang et niveau dans le SPS, un ensemble de paramètres d'image (PPS), des informations d'en-tête de segment de tranche, des informations d'amélioration supplémentaires (SEI) et une unité de données définie par l'utilisateur ;
dans lequel la plage de restriction représente une intersection d'une première plage de restriction, d'une deuxième plage de restriction et d'une troisième plage de restriction, la première plage de restriction ayant été définie selon un profil, rang et niveau adopté, la deuxième plage de restriction ayant été définie selon des frontières de carreaux et de tranches d'une image, la troisième plage de restriction ayant été définie selon une capacité de décodage obtenue par négociation avec un décodeur.

6. Procédé selon la revendication 5, dans lequel la réalisation du filtrage en boucle sur le bloc reconstruit selon les informations de plage de restriction comprend :
la détermination d'une longueur de temps d'attente entre un processus de reconstruction de couche de bloc et un processus de filtrage en boucle selon les informations de plage de restriction ;
le démarrage de l'exécution du processus de filtrage en boucle à la longueur de temps d'attente après le démarrage de l'exécution du processus de reconstruction de couche de bloc.

7. Procédé selon la revendication 6, dans lequel
une dernière unité de bloc, où un bloc IBC adoptant des pixels dans une première unité de bloc actuelle en tant que références est situé, est déterminée en tant que deuxième unité de bloc selon les informations de plage de restriction ;
la détermination de la première unité de bloc, de la deuxième unité de bloc et d'unités de bloc entre la première unité de bloc et la deuxième unité de bloc en tant que quatrième plage selon une séquence de décodage ;
une union de la quatrième plage et d'une plage d'unités de bloc adoptée pour un mode d'intra-prédiction conventionnel est déterminée en tant que cinquième plage ; et
un nombre d'unités de bloc comprises entre la première unité de bloc et une dernière unité de bloc de la cinquième plage est déterminé en tant que longueur de temps d'attente ;
le mode d'intra-prédiction conventionnel adopte directement des pixels adjacents d'un bloc codé actuel en tant que pixels de référence pour construire un bloc prédit, dans lequel des emplacements des pixels adjacents dans le mode d'intra-prédiction conventionnel sont prédéfinis et ne sont pas indiqués par des vecteurs de décalage d'emplacement ;
la limitation de la cinquième plage à l'intérieur d'une plage de carreaux et/ou de tranches où la première unité de bloc est située selon des informations de partition de carreau concernant l'image actuelle et/ou un emplacement de début d'une tranche où la première unité de bloc est située ;
dans lequel la plage d'unités de bloc adoptée pour le mode d'intra-prédiction conventionnel comprend au moins une des plages suivantes ou une union d'au moins deux des plages suivantes :
une plage d'unités de bloc, adoptant des pixels à des frontières droites et à des frontières inférieures d'unités de bloc qui peuvent être adoptées en tant que références d'intra-prédiction, est déterminée en tant que cinquième plage selon la séquence de décodage d'unités de bloc, des tailles des unités de bloc et un nombre maximal de pixels de référence adjacents devant être adoptés dans un processus d'intra-prédiction ; et
des unités de bloc adjacentes adoptées pour un filtrage de dégroupement (DF) des unités de bloc sont déterminées, une plage des unités de bloc, dont des pixels à des frontières inférieures sont adoptés en tant que références d'intra-prédiction, est déterminée en tant que sixième plage pour les unités de bloc adjacentes droites, et une plage des unités de bloc, dont des pixels à des frontières droites sont adoptés en tant que références d'intra-prédiction, est déterminée en tant que septième plage pour les unités de bloc adjacentes inférieures.

8. Dispositif de codage, comprenant :
un premier module de détermination, configuré pour déterminer des informations de plage de restriction concernant un ou des vecteur(s) de copie de bloc (BV) d'un mode de copie d'intra-bloc (IBC) ;
un module d'écriture, configuré pour écrire les informations de plage de restriction dans un flux de bits ; et
un premier module de filtrage en boucle, incluant un pipeline de filtrage en boucle configuré pour réaliser un filtrage en boucle sur un bloc reconstruit selon les informations de plage de restriction ;
**caractérisé en ce que** le premier module de détermination est configuré pour déterminer les informations de plage de restriction concernant le ou les BV du mode IBC par :
la détermination d'une première plage de restriction du ou des BV selon un profil, rang et niveau adopté ;
la détermination d'une deuxième plage de restriction du ou des BV selon des frontières de carreaux et de tranches d'une image ;
la détermination d'une troisième plage de restriction du ou des BV selon une capacité de décodage obtenue par négociation avec un décodeur ; et
la détermination d'une intersection de la première plage de restriction, de la deuxième plage de restriction et de la troisième plage de restriction en tant que quatrième plage de restriction du ou des BV du mode IBC adopté dans un processus de codage ;
le module d'écriture est configuré pour écrire les informations de plage de restriction dans le flux de bits par : l'écriture d'informations concernant la quatrième plage de restriction du ou des BV dans au moins une des unités de données suivantes : des unités de données à l'exception des informations de profil, rang et niveau dans le VPS, des unités de données à l'exception des informations de profil, rang et niveau dans le SPS, un ensemble de paramètres d'image (PPS), des informations d'en-tête de segment de tranche, des informations d'amélioration supplémentaires (SEI) et une unité de données définie par l'utilisateur.

9. Dispositif de décodage, comprenant :
un module d'acquisition, configuré pour acquérir des informations de plage de restriction concernant un ou des vecteur (s) de copie de bloc (BV) d'un mode de copie d'intra-bloc (IBC) à partir d'un flux de bits ;
un second module de détermination, configuré pour déterminer une plage de restriction du ou des BV du mode IBC selon les informations de plage de restriction ; et
un second module de filtrage en boucle, incluant un pipeline de filtrage en boucle configuré pour réaliser un filtrage en boucle selon un bloc reconstruit selon les informations de plage de restriction ;
**caractérisé en ce que**
l'acquisition des informations de plage de restriction concernant le ou les BV du mode IBC à partir du flux de bits comprend :
l'acquisition des informations de plage à partir d'au moins une des unités de données suivantes : des unités de données à l'exception des informations de profil, rang et niveau dans le VPS, des unités de données à l'exception d'informations de profil, rang et niveau dans le SPS, un ensemble de paramètres d'image (PPS), des informations d'en-tête de segment de tranche, des informations d'amélioration supplémentaires (SEI) et une unité de données définie par l'utilisateur ;
et **en ce que**
la plage de restriction représente une intersection d'une première plage de restriction, d'une deuxième plage de restriction et d'une troisième plage de restriction, la première plage de restriction ayant été définie selon un profil, rang et niveau adopté, la deuxième plage de restriction ayant été définie selon des frontières de carreaux et de tranches d'une image, la troisième plage de restriction ayant été définie selon une capacité de décodage obtenue par négociation avec le décodeur.
